# EUROPÄISCHE PATENTSCHRIFT

(11) **EP 3 310 952 B1**
(45) Veröffentlichungstag und Bekanntmachung des Hinweises auf die Patenterteilung: **18.12.2019**
(21) Anmeldenummer: 16731568.8
(22) Anmeldetag: 17.06.2016
(51) Int. Cl.: D03D 13/00, D03D 41/00, D03D 47/18, D03D 47/23, D03D 49/06, D03D 47/39

(54) **ZWEIDIMENSIONALES GEWEBE UND VERFAHREN ZU DESSEN HERSTELLUNG**
TWO-DIMENSIONAL FABRIC AND METHOD FOR THE PRODUCTION THEREOF
TISSU BIDIMENSIONNEL ET PROCÉDÉ DE PRODUCTION DE CELUI-CI

(30) Priorität: 18.06.2015 DE 102015109785
(43) Veröffentlichungstag der Anmeldung: 25.04.2018
(73) Patentinhaber: Groz-Beckert KG, 72458 Albstadt (DE)
(72) Erfinder: LAOURINE, Ezzeddine, 72458 Albstadt (DE)
(74) Vertreter: Rüger Abel Patentanwälte PartGmbB
(86) Internationale Anmeldenummer: PCT/EP2016/064067
(87) Internationale Veröffentlichungsnummer: WO 2016/203007

(56) Entgegenhaltungen:
- DE-A1-102013 011 580
- US-A- 3 100 003
- US-A1- 2014 342 630

## Beschreibung

Die vorliegende Erfindung betrifft ein zweidimensionales Gewebe zur Verwendung bei der Herstellung von dreidimensionalen Verbundwerkstoffteilen und ein Verfahren zur Herstellung eines solchen zweidimensionalen Gewebes. Solche Verbundwerkstoffteile werden auch als Composites bezeichnet.

Zweidimensionale Gewebe zur Herstellung von dreidimensionalen Verbundwerkstoffteilen enthalten Kettfäden und/oder Schussfäden aus einem zugfesten Material, wie etwa Karbon. In der Praxis entstehen häufig Schwierigkeiten, wenn solche zweidimensionalen Gewebe bei der Herstellung von sogenannten "Preforms" verwendet werden. Dabei werden eine oder mehrere Gewebelagen übereinander gelegt und vorgeformt, um daraus in weiteren Verarbeitungsschritten das Verbundwerkstoffteil in seiner gewünschten dreidimensionalen Form herzustellen. Die Preform dient dabei dazu, die spätere Verarbeitung in die endgültige Bauteilform zu vereinfachen. Die Preform soll in etwa schon die dreidimensionale Gestalt haben, die auch das spätere, endgültige Verbundwerkstoffteil aufweisen soll. Für die Herstellung der Preform ist es daher erforderlich, dass das zweidimensionale Gewebe sich möglichst problemlos in die gewünschte dreidimensionale Form drapieren und später zum fertigen Verbundwerkstoffteil umformen lässt.

Trotz der erforderlichen Drapierbarkeit des Gewebes muss dennoch sichergestellt werden, dass die gewünschte Festigkeit erreicht wird. Die Verstärkungsfäden müssen daher eine vorgegebene Lage bzw. Richtung im dreidimensionalen Verbundwerkstoffteil einnehmen. Die Materialien, die zur Herstellung solcher Verstärkungsgarne dienen, sind in der Regel teuer. Bei der Herstellung der Preform werden die zweidimensionalen Gewebe zurechtgeschnitten. Das überschüssige Gewebematerial, das nicht der gewünschten Gestalt der Preform entspricht, wird entfernt. Dies verursacht einen hohen Arbeitsaufwand sowie einen großen Anteil von Materialabfällen.

Aus JP 2014 181431 A ist ein zweidimensionales Gewebe bekannt, wobei lediglich in einem bestimmten, später auszuschneidenden Bereich Verstärkungsgarne an die Kettfäden und/oder Schussfäden geklebt sind. Die Klebestellen werden später aus dem fertigen zweidimensionalen Gewebe herausgeschnitten. Auch bei diesem Verfahren sind der Verschnitt und der manuelle Aufwand sehr groß.

DE 10 2008 036 347 A1 beschreibt ein Verfahren zum Einbringen sich partiell in Gewebebreite zusätzlich erstreckender Schussfäden während des maschinellen Webprozesses. Mit Hilfe von beispielsweise Jacquard-Webmaschinen sollen auf diese Weise Rekonstruktionen von alten Broschiergeweben auf maschinellem Weg herstellbar sein. Zur Gewebemusterbildung können Schussfäden eingetragen werden, die sich nicht über die gesamte Gewebebreite erstrecken, sondern lediglich in einem Abschnitt des Kettfadenbaums eingebunden sind.

DE 10 2013 011 580 A1 beschreibt ein zweidimensionales Gewebe Mit Verstärkungsschussfäden, die in variabler Breite mit allen oder nur einem Teil der Kettfäden verwoben werden.

Es kann als Aufgabe angesehen werden, ein zweidimensionales Gewebe sowie ein Verfahren zu schaffen, das die Effizienz bei der Herstellung eines dreidimensionalen Verbundwerkstoffteils erhöht.

Diese Aufgabe wird durch ein zweidimensionales Gewebe mit den Merkmalen des Patentanspruches 1 sowie ein Verfahren mit den Merkmalen des Patentanspruches 7 gelöst.

Erfindungsgemäß wird ein zweidimensionales Gewebe zur Verwendung bei der Herstellung eines dreidimensionalen Verbundwerkstoffteils vorgeschlagen, das Verstärkungsschussfäden und Verstärkungskettfäden aus einem Verstärkungsgarn aufweist. Die Verstärkungsschussfäden und Verstärkungskettfäden gehören zu einem Verstärkungssystem.

Das Gewebe weist außerdem Bindekettfäden und/oder Bindeschussfäden aus einem sich von dem Verstärkungsgarn unterscheidenden Bindegarn auf, die zu einem Bindungssystem gehören und sich in einer Kettfadenrichtung erstrecken. Das Verstärkungsgarn hat eine höhere Zugfestigkeit als das Bindegarn.

Die beiden äußersten Bindekettfäden, die den größtmöglichen Abstand zueinander aufweisen, definieren eine Kettbaumbreite. Die Kettbaumbreite wird rechtwinklig zur Kettfadenrichtung gemessen und kann der Gewebebreite entsprechen, wenn sich optional vorhandene Verstärkungskettfäden zwischen den äußersten Bindekettfäden befinden.

Zumindest einige der Verstärkungsschussfäden und der Verstärkungskettfäden sind als verkürzte Verstärkungsfäden ausgeführt. Die verkürzten Verstärkungsfäden haben eine Fadenlänge, die entweder kleiner ist als die Kettbaumbreite, so dass sich der betreffende Verstärkungsschussfaden nicht vollständig zwischen den beiden äußersten Bindekettfäden erstreckt, oder die kürzer ist als das hergestellte Gewebe bzw. kürzer als die Bindekettfäden. Die Fadenlänge der verkürzten Verstärkungsfäden und die jeweilige Fadenendposition der beiden Enden jedes verkürzten Verstärkungsfadens werden abhängig von dem herzustellenden dreidimensionalen Verbundwerkstoffteil bestimmt. Die Verstärkungsfäden bzw. verkürzten Verstärkungsfäden werden bereits beim Weben so positioniert, dass sie an die später herzustellende dreidimensionale Gestalt des Verbundwerkstoffteils bzw. der Preform angepasst sind. Dadurch wird die Menge an Abfall und insbesondere die Menge an abzutrennendem Verstärkungsgarn erheblich reduziert. Die Verstärkungsfäden können als flott liegende Fäden ohne direkte Bindung mit den Bindekettfäden und Bindeschussfäden im zweidimensionalen Gewebe angeordnet sein, was die Drapierfähigkeit verbessert und außerdem einen möglichst "gestreckten" Verlauf der Verstärkungsfäden gewährleistet. Ein wellenförmiger Verlauf der Verstärkungsfäden durch Gewebebindungsstellen kann auf diese Weise vermieden werden. Die Verstärkungsfäden können auch webtechnische Bindungsstellen mit den Bindekettfäden und/oder Bindeschussfäden aufweisen, um die Verbindung zwischen Bindungs- und Verstärkungssystem zu verbessern. Vorzugsweise werden die Verstärkungsfäden dabei möglichst gestreckt mit geringer Welligkeit im Gewebe angeordnet, beispielsweise durch Einstellungen der Webmaschine beim Weben (Bindungsart, Fadenspannungen, etc.).

Durch das Vorherbestimmen der Länge und der genauen Lage der Verstärkungsfäden im zweidimensionalen Gewebe wird der Aufwand bei der Herstellung von Preforms bzw. dem endgültigen dreidimensionalen Verbundwerkstoffteil reduziert.

Unter einem dreidimensionalen Werkstoffverbundteil ist eine Form zu verstehen, bei der das ursprünglich zweidimensionale Gewebe über seine Dicke hinausgehend rechtwinklig zur ursprünglichen Erstreckungsebene des Gewebes verformt ist. Solche dreidimensionalen Verbundwerkstoffteile können überall dort eingesetzt werden, wo eine hohe Festigkeit des Materials bei gleichzeitig geringem Gewicht erwünscht ist, beispielsweise im Fahrzeug-, Flugzeug- oder Schiffsbau.

Das Bindegarn und das Verstärkungsgarn bestehen vorzugsweise aus unterschiedlichen Materialien. Zusätzlich oder alternativ können das Bindegarn und das Verstärkungsgarn unterschiedliche Querschnittsflächen und/oder unterschiedliche Querschnittskonturen und/oder unterschiedliche Titer aufweisen.

Als Bindegarn kann beispielsweise ein Kunststoff enthaltendes Garn, etwa ein Phenoxy-Garn verwendet werden.

Das Verstärkungsgarn weist bei bevorzugten Ausführungsbeispielen Karbon- und/oder Aramid- und/oder Keramik- und/oder Glasfasern und/oder vorgetränkte Rovings, beispielsweise Verstärkungsbänder aus den oben genannten Fasern, auf.

Das Verstärkungsgarn kann beispielsweise als Verstärkungsband ausgeführt sein. Es weist dabei in seinem Querschnitt eine Abmessung auf, die in eine Richtung größer ist als rechtwinklig hierzu. Beispielsweise kann im Querschnitt gesehen die eine Dimension des Verstärkungsgarns zumindest 4-mal bis 5-mal größer sein als die jeweilige andere Dimension. Das Verstärkungsband ist insbesondere schiebesteif, so dass es als Kett- und/oder Schussfaden in das Bindesystem eingeschoben werden kann.

Wie bereits beschrieben, kann es vorteilhaft sein, ein Bindungssystem aus Bindeschussfäden und Bindekettfäden vorzusehen, die die Verstärkungsschussfäden und/oder Verstärkungskettfäden halten. Es ist bevorzugt, wenn die Verstärkungsschussfäden und die Bindeschussfäden kreuzungsfrei und/oder in Kettfadenrichtung mit Abstand zueinander angeordnet sind. Entsprechend können die Verstärkungsschussfäden und die Bindeschussfäden kreuzungsfrei und/oder in Schussfadenrichtung mit Abstand zueinander angeordnet sein. Bei einem Ausführungsbeispiel können die Bindekettfäden und die Bindeschussfäden an Bindungsstellen zwischen den Verstärkungsschussfäden und/oder Verstärkungskettfäden miteinander webtechnisch verbunden sein. Die Art der Webbindung im Bindungssystem kann nach Bedarf gewählt werden und innerhalb des Gewebes auch variieren. Beispielsweise können eine Atlasbindung, eine Köperbindung, eine Leinwandbindung oder auch eine Dreherbindung vorgesehen sein.

Bei einem Ausführungsbeispiel ist es auch möglich, dass die Verstärkungsschussfäden und/oder Verstärkungskettfäden jeweils eine oder mehrere Bindungsstellen aufweisen, an denen sie unmittelbar mit einem der Bindekettfäden bzw. Bindeschussfäden gebunden sind. Beispielsweise können solche Bindungsstellen bei der Herstellung des zweidimensionalen Gewebes zur vorläufigen Lagefixierung eines Verstärkungsschussfadens vorhanden sein. Diese Bindungsstellen sind bei anderen Ausführungsformen des Gewebes nicht vorgesehen.

Ein zweidimensionales Gewebe zur Verwendung bei der Herstellung eines dreidimensionalen Verbundwerkstoffteils kann wie folgt hergestellt werden:
Eine Webmaschine wird mit Verstärkungsschussfäden und/oder Verstärkungskettfäden aus einem Verstärkungsgarn und mit Bindekettfäden aus einem Bindegarn bestückt. Bei einem bevorzugten Ausführungsbeispiel sind außerdem Bindeschussfäden aus einem Bindegarn vorhanden, die zusätzlich zu den Verstärkungsschussfäden eingetragen werden. Wie erläutert, geben die beiden äußersten Bindekettfäden die Kettbaumbreite an.

Die Anzahl und die Position der Verstärkungsschussfäden und/oder Verstärkungskettfäden in dem zweidimensionalen Gewebe werden abhängig von der Gestalt des herzustellenden dreidimensionalen Verbundwerkstoffteils ermittelt und der Webmaschine vorgegeben. Einige der Verstärkungsschussfäden und/oder Verstärkungskettfäden sind als verkürzte Verstärkungsfäden ausgeführt, deren Länge kleiner ist als die Kettbaumbreite. Abhängig von der dreidimensionalen Form des herzustellenden Verbundwerkstoffteils wird für die verkürzten Verstärkungsfäden die Länge sowie die beiden Fadenendpositionen der freien Enden jedes verkürzten Verstärkungsfadens ermittelt und der Webmaschine vorgegeben.

Die Bindekettfäden werden vor dem Eintrag eines Verstärkungsschussfadens und/oder Verstärkungskettfäden in die jeweils vorgegebene Eintragsstellung gebracht. Anschließend wird der wenigstens eine Verstärkungsschussfaden und/oder der wenigstens eine Verstärkungskettfaden aus einem Fadenvorrat eingetragen. Wenn es sich um einen verkürzten Verstärkungsfaden handelt, kann dabei wie folgt vorgegangen werden:
Das freie Ende eines Verstärkungsfadens wird aus dem Fadenvorrat bis zu einer ersten Fadenendposition des Verstärkungsschussfadens eingetragen. Anschließend wird der Verstärkungsfaden an bzw. benachbart zu der zweiten Fadenendposition durchtrennt.

Diese Vorgehensweise kann bei einer bevorzugten Ausführungsform durch zwei Greifer durchgeführt werden, was nachfolgend beschrieben ist.

Das freie Ende eines Verstärkungsfadens wird aus dem Fadenvorrat mit einem ersten Greifer bis zu einer ersten Fadenendposition des Verstärkungsfadens oder zu einer Übergabeposition eingetragen. An der Übergabeposition bzw. der ersten Fadenendposition erfolgt die Übergabe des freien Endes des Verstärkungsfadens an einen zweiten Greifer. Befindet sich der zweite Greifer an der Übergabeposition außerhalb der ersten Fadenendposition, wird der zweite Greifer anschließend in die erste Fadenendposition bewegt. Gleichzeitig oder anschließend wird der erste Greifer vom zweiten Greifer weg bewegt, bis zu einer zweiten Fadenendposition des Verstärkungsfadens. Der Verstärkungsfaden wird durch die beiden Greifer zwischen der ersten Fadenendposition und der zweiten Fadenendposition gehalten. Anschließend wird der Verstärkungsfaden an bzw. benachbart zu der zweiten Fadenendposition durchtrennt. Der erste Greifer wird mit dem freien Ende des mit dem Fadenvorrat verbundenen Verstärkungsfadens zurück bewegt. Vorher, gleichzeitig oder nachher gibt der zweite Greifer den eingetragenen Verstärkungsfaden an der ersten Fadenendposition frei und wird von der ersten Fadenendposition weg bewegt. Schließlich wird der eingetragene Verstärkungsfaden mit Hilfe des Bindungssystems fixiert.

Es ist bevorzugt, wenn sich der zweite Greifer bei seiner Bewegung von der Übergabeposition in die erste Fadenendposition des Verstärkungsfadens vom ersten Greifer weg bewegt. Wenn sich beide Greifer bei ihrer Bewegung in die jeweilige Fadenendposition voneinander weg bewegen, kann der Verstärkungsfaden zwischen den Greifern gestreckt gespannt werden. Wie bereits erläutert ist es aber auch möglich, dass die Übergabeposition bereits mit der ersten Fadenendposition übereinstimmt.

Der erste Greifer kann eine Halteeinrichtung aufweisen, die zwischen einer den Verstärkungsfaden klemmend beaufschlagenden Klemmstellung und einer den Verstärkungsfaden lose umgreifenden Führungsstellung umschaltbar ist. Bei dieser Ausgestaltung des ersten Greifers ist es vorteilhaft, wenn die Halteeinrichtung von der Klemmstellung in die Führungsstellung umgeschaltet wird, nachdem der erste Greifer das freie Ende des Verstärkungsschussfadens an den zweiten Greifer übergeben hat. Es ist weiterhin bevorzugt, wenn die Halteeinrichtung von der Führungsstellung in die Klemmstellung umgeschaltet wird, wenn der erste Greifer die zweite Fadenendposition des Verstärkungsfadens erreicht hat. Dann wird der im zweidimensionalen Gewebe zu positionierende Verstärkungsfaden bzw. verkürzte Verstärkungsfaden zwischen den beiden Greifern klemmend gehalten.

Bei einer weiteren vorteilhaften Ausführung hat der erste Greifer eine Trenneinrichtung. Es ist vorteilhaft, wenn die Trenneinrichtung betätigt wird, nachdem der erste Greifer die zweite Fadenendposition des Verstärkungsfadens erreicht hat und insbesondere nachdem die Halteeinrichtung von der Führungsstellung in die Klemmstellung umgeschaltet wurde. Die Trenneinrichtung durchtrennt den Verstärkungsfaden vorzugsweise an einer Stelle benachbart zur Halteeinrichtung des ersten Greifers und zwischen der Halteeinrichtung des ersten Greifers und dem zweiten Greifer.

Bei einer bevorzugten Ausführung des ersten Greifers ist zusätzlich zur Halteeinrichtung eine Klemmeinrichtung vorhanden, die zwischen einer den Verstärkungsfaden klemmend beaufschlagenden Klemmstellung und einer den Verstärkungsfaden freigebenden Lösestellung umschaltbar ist. Vor dem Durchtrennen des Verstärkungsfadens können sowohl die Halteeinrichtung, als auch die Klemmeinrichtung ihre jeweilige Klemmstellung einnehmen. Dabei kann die Trennstelle zwischen der Halteeinrichtung und der Klemmeinrichtung vorgesehen sein.

Es wird an dieser Stelle darauf hingewiesen, dass die Ausgestaltung des ersten Greifers auch unabhängig von dem erfindungsgemäßen Verfahren bzw. dem erfindungsgemäßen zweidimensionalen Gewebe in einer Webmaschine eingesetzt werden kann.

Bei einem weiteren Verfahren, das zusätzlich oder in Kombination mit dem vorstehenden Verfahren ausgeführt werden kann, kann ein schiebesteifer Verstärkungsschussfaden bzw. ein schiebesteifes Verstärkungsband ohne die beiden Greifer wie folgt eingetragen werden:
Das freie Ende des schiebesteifen Verstärkungsfadens wird aus dem Fadenvorrat transportiert, beispielsweise von einer Rolle oder Spule abgewickelt, und bis zu der ersten Fadenendposition eingeschoben. Ein Ziehen durch einen Greifer ist nicht vorgesehen. Die Steifigkeit des Verstärkungsfadens reicht aus, um dessen freies Ende durch eine Transportvorrichtung benachbart zu dem Kettbaum bis zu der ersten Fadenendposition zu schieben. Anschließend wird der Verstärkungsschussfaden an bzw. benachbart zu der zweiten Fadenendposition durch eine Trenneinrichtung durchtrennt.

Der Eintrag des Fadens kann durch ein Medium, insbesondere Luft, unterstützt werden. Diese Unterstützung kann z.B. bei Webmaschinen bzw. Geweben mit größerer Breite vorteilhaft sein.

Jeweils zwischen zwei unmittelbar benachbarten Bindekettfäden oder benachbart zu den äußersten Bindekettfäden des Kettbaums kann jeweils wenigstens eine Fördereinrichtung bzw. wenigstens eine Spule angeordnet oder positionierbar sein, mittels der jeweils ein Verstärkungskettfaden eingetragen werden kann. Der Eintrag der Verstärkungskettfäden mittels einer Fördereinrichtung erfolgt in Kettfadenrichtung vorzugsweise ausgehend von einer Position benachbart zur Webkante bzw. auf der den Webschäften entgegengesetzten Seite des Webfachs. Auf einer oder auf beiden Seiten des Kettbaums kann jeweils eine Fördereinrichtung bzw. eine Spule zum Eintragen eines Verstärkungsschussfadens in Schussrichtung vorhanden sein. Abhängig von der Gestalt des herzustellenden Gewebes ist an jeder Stelle, an der ein Verstärkungsfaden eingetragen werden soll, eine Fördereinrichtung vorhanden, die den Verstärkungsfaden entweder als Verstärkungsschussfaden in Schussrichtung oder als Verstärkungskettfaden in Kettrichtung eintragen kann.

Jeder Fördereinrichtung ist insbesondere individuell und unabhängig von den anderen Fördereinrichtungen zum Eintragen eines betreffenden Verstärkungsfadens aktivierbar bzw. antreibbar. Es ist dabei möglich, dass die als Spulen ausgeführten Fördereinrichtungen zum Einbringen der Verstärkungskettfäden zumindest gruppenweise auf jeweils einer gemeinsamen Welle angeordnet sind, jedoch unabhängig voneinander drehbar gelagert sind. Jede Spule kann beispielsweise durch einen Riemenantrieb oder auf andere geeignete Weise unabhängig von den anderen Spulen auf der Welle antreibbar sein.

Aufgrund der begrenzten Platzverhältnisse können auch platzsparende Elektromagnete oder Piezoelemente eingesetzt werden und der Antrieb inkrementell ausgeführt sein.

Besonders vorteilhaft können einer oder mehreren der Fördereinrichtungen bzw. Spulen jeweils eine Trenneinrichtung, beispielsweise ein Schneidmesser, zugeordnet sein, die bzw. das derart koordiniert mit der wenigstens einen zugeordneten Fördereinrichtung bzw. Spule angesteuert wird, dass es bei einer Richtungsumkehr des Antriebs den Verstärkungsfaden automatisch durchtrennt.

Die Fördereinrichtungen bzw. Spulen können bewegbar sein, derart, dass sie von einer Ruheposition in eine Eintragsposition zum Eintragen des Verstärkungsfadens bewegbar sind. Hierfür kann für jede einzelne oder für eine Gruppe von Fördereinrichtungen bzw. Spulen eine Positioniereinheit vorhanden sein.

Der Verstärkungsfaden kann dabei oberhalb oder unterhalb der Drehachse einer Spule zum Eintragen abgewickelt werden.

Ein schiebesteif ausgeführter Verstärkungsfaden kann ausgehend von der Fördereinrichtung mithin greiferlos ohne zusätzliche Mittel durch Schieben in Kettfadenrichtung oder Schussfadenrichtung eingetragen werden.

Zum Beispiel kann durch eine auf die Verstärkungsfäden aufgebrachte Schlichte eine ausreichend Schiebesteifigkeit zum Schieben der Verstärkungsfäden bereitgestellt werden.

Es ist vorteilhaft, wenn zur Abstützung des Verstärkungsfadens eine Auflagefläche vorhanden ist. Die Auflagefläche kann durch eine Oberfläche eines Stützkörpers gebildet sein, die benachbart zu der wenigstens einen Fördereinrichtung angeordnet ist. Die Auflagefläche erstreckt sich in der Ebene, in der die Verstärkungsfäden in Kettfadenrichtung oder Schussfadenrichtung eingetragen werden sollen. Vorzugsweise ist eine gemeinsame Auflagefläche sowohl für die Verstärkungsschussfäden als auch für die Verstärkungskettfäden vorhanden.

In dem Stützkörper kann bei einem bevorzugten Ausführungsbeispiel für jeden Bindekettfaden ein Schlitz eingebracht sein. Die Schlitze erstrecken sich in einer Ebene, in der der betreffende Bindekettfaden beim Öffnen und Schließen des Webfaches durch Webschäfte der Webmaschine bewegt wird. Vorzugsweise sind die Schlitze in einer Vertikalebene ausgerichtet, die durch eine Vertikalrichtung und die Kettfadenrichtung aufgespannt ist. Die Schlitze im Stützkörper erstrecken sich parallel zueinander. Die Breite der Schlitze ist an die Stärke der Bindungskettfäden angepasst und vorzugsweise größer als die Stärke der Bindungskettfäden, so dass diese beim Öffnen und Schließen des Webfaches ohne an den Ecken und Kanten hängen zu bleiben in die Schlitze eingeführt und wieder herausbewegt werden können. Die Schlitze sind an der Auflagefläche offen. Die Verstärkungsfäden können schiebend entlang der Auflagefläche auf dem Stützkörper in die gewünschte Position bewegt werden, ohne nach unten abzuknicken oder sich nach unten zu krümmen. Dadurch ist die ausgehend von der Fördereinrichtung erreichbare freie Länge zwischen dem freien Ende des Verstärkungsfadens und der jeweils zugeordneten Fördereinrichtung vergrößert.

Die Verstärkungsschussfäden und/oder Verstärkungskettfäden werden in der Anmeldung allgemein als Verstärkungsfäden bezeichnet. Die Verstärkungsfäden können eine thermoplastische Matrix aufweisen. Durch Energieeintrag, beispielsweise durch Wärmeeintrag, können die Verstärkungsfäden an Kreuzungsstellen miteinander verbunden bzw. verschweißt werden.

Nachdem der Verstärkungsfaden mit der vorbestimmten Fadenlänge eingetragen und an den vorbestimmten Fadenendpositionen angeordnet wurde, kann der eingetragene Verstärkungsfaden in mehreren Schritten fixiert werden. Beispielsweise kann ein eingetragener Verstärkungsschussfaden durch einen Fachwechsel von lediglich einem oder mehreren Bindekettfäden fixiert werden. Außerdem kann vor dem Fachwechsel dieser Bindekettfäden und/oder vor dem Eintragen eines Verstärkungskettfadens bei einer Ausführung wenigstens ein Bindeschussfaden eingetragen werden. Diese vorläufige Bindung kann dazu dienen, die Position des eingetragenen Verstärkungsschussfadens vor dem Anschlag zu sichern. Nach dem Anschlag des Verstärkungsschussfadens kann dann ein Fachwechsel von zusätzlichen Bindekettfäden zur Fixierung des Verstärkungsschussfadens ausgeführt werden.

Wie erläutert ist es auch möglich, zusätzlich zu den Verstärkungsschussfäden auch einen oder mehrere Verstärkungskettfäden einzubringen, die sich dann jeweils zwischen einer ermittelten ersten Fadenendposition und einer ermittelten zweiten Fadenendposition des Verstärkungskettfadens erstrecken, wobei die Fadenendpositionen des jeweiligen Verstärkungskettfadens analog zu den Fadenendpositionen der Verstärkungsschussfäden ermittelt werden.

Die Verstärkungskettfäden können mit einer Greiferanordnung eingebracht werden, wie es vorstehend im Zusammenhang mit den Verstärkungsschussfäden erläutert wurde.

Es ist auch möglich, die Verstärkungskettfäden analog zu den Verstärkungsschussfäden bis zu einer ersten Fadenendposition des Verstärkungskettfadens einzuschieben und an einer zweiten Fadenendposition des Verstärkungskettfadens abzutrennen, wenn die Verstärkungskettfäden schiebesteif sind.

Vorteilhafte Ausgestaltungen der Erfindung ergeben sich aus den abhängigen Patentansprüchen, der Beschreibung und der Zeichnungen. Nachfolgend werden bevorzugte Ausführungsbeispiele der Erfindung anhand der beigefügten Zeichnungen im Einzelnen erläutert. Es zeigen:
Fig. 1 eine schematische Draufsicht auf ein zweidimensionales Gewebe zur Herstellung eines dreidimensionalen Verbundwerkstoffteils in einer stark vereinfachten Prinzipdarstellung,
Fig. 2 ein zweidimensionales Gewebe zur Herstellung eines dreidimensionalen Verbundwerkstoffteils in einer perspektivischen Darstellung,
Fig. 3 bis 11 jeweils unterschiedliche Situationen bzw. Schritte eines Verfahrens zur Herstellung eines zweidimensionalen Gewebes,
Fig. 12 eine schematische, blockschaltbildähnliche Darstellung eines ersten Greifers zur Verwendung bei der Herstellung eines zweidimensionalen Gewebes,
Fig. 13 und 14 jeweils eine schematische, blockschaltbildähnliche Darstellung unterschiedlicher Zustände einer Halteeinrichtung des Greifers aus Fig. 12,
Fig. 15 und 16 jeweils eine schematische, blockschaltbildähnliche Darstellung unterschiedlicher Situationen bzw. Schritte eines Verfahrens zum Eintragen eines schiebesteifen Verstärkungskettfadens zur Herstellung eines zweidimensionalen Gewebes,
Fig. 17 eine schematische blockschaltbildähnliche Darstellung eines Ausführungsbeispiels einer Webmaschine,
Fig. 18 eine schematische perspektivische Darstellung eines Stützkörpers mit einer Auflagefläche für die Verstärkungsfäden,
Fig. 19 eine abgewandelte Ausführungsform einer Auflagefläche eines Stützkörpers in schematischer Draufsicht,
Fig. 20 eine schematische perspektivische Darstellung eines Bereichs des Webfachs mit Fördereinrichtungen zum Eintragen von Verstärkungsfäden in Schussfadenrichtung und Kettfadenrichtung und
Fig. 21 eine schematische blockschaltbildähnliche Darstellung eines Ausführungsbeispiels zum individuellen Antreiben einer Fördereinrichtung aus Fig. 20.

Die Erfindung betrifft ein zweidimensionales Gewebe, das dazu eingerichtet ist, bei der Herstellung eines dreidimensionalen Verbundwerkstoffteils verwendet zu werden. Unter einem dreidimensionalen Verbundwerkstoffteil wird ein Teil verstanden, das Verstärkungsfäden aus einem zugfesten Verstärkungsgarn enthält und das eine dreidimensionale gekrümmte und/oder abgewinkelte Gestalt aufweist. Dabei ist unter einer dreidimensionalen Gestalt eine solche Gestalt zu verstehen, die sich aus einer Erstreckungsebene des zweidimensionalen Gewebes über deren Dicke hinaus in eine dritte Dimension erstreckt. Solche Verbundwerkstoffteile können bei verschiedenen Anwendungen eingesetzt werden, beispielsweise im Fahrzeug-, Flugzeug- oder Schiffsbau.

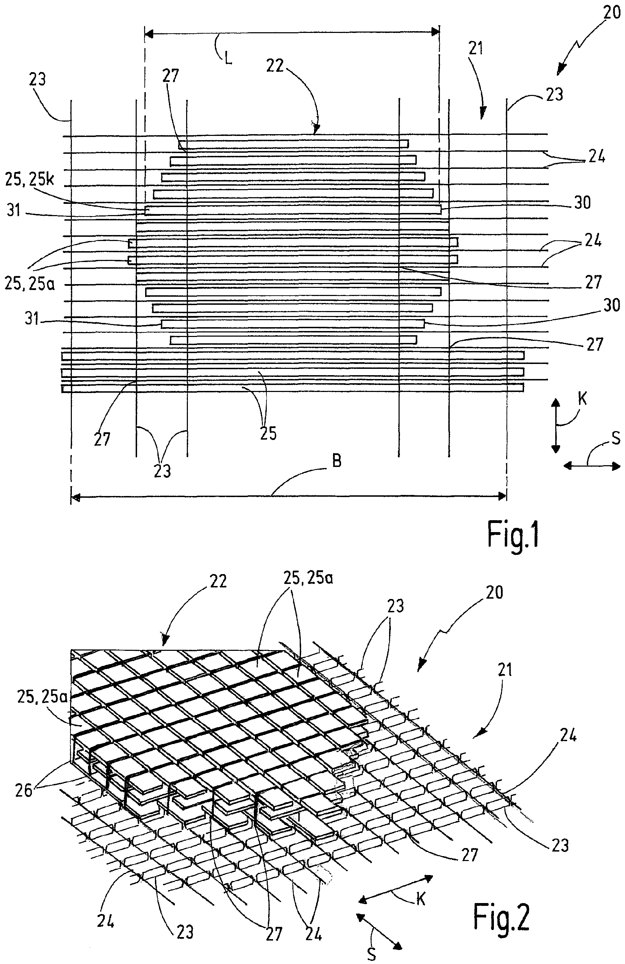

In den Fig. 1 und 2 ist schematisch ein solches zweidimensionales Gewebe 20 veranschaulicht. Das zweidimensionale Gewebe 20 weist ein Bindungssystem 21 und ein Verstärkungssystem 22 auf. Das Bindungssystem 21 weist beim Ausführungsbeispiel Bindekettfäden 23 und Bindeschussfäden 24 auf. Die Bindekettfäden 23 erstrecken sich in einer Kettfadenrichtung K. Die Richtung rechtwinklig zur Kettfadenrichtung K wird als Schussfadenrichtung S bezeichnet. Bei dem hier veranschaulichten Ausführungsbeispiel des zweidimensionalen Gewebes 20 verlaufen die Schussfäden in Schussfadenrichtung S rechtwinklig zu den Kettfäden. In Abwandlung hierzu ist es auch möglich, die Schussfäden in einem anderen Winkel gegenüber den Kettfäden anzuordnen.

Das Verstärkungssystem 22 weist beim Ausführungsbeispiel nach Fig. 1 lediglich Verstärkungsschussfäden 25 auf. Alternativ oder zusätzlich zu den Verstärkungsschussfäden 25 können auch Verstärkungskettfäden 26 vorhanden sein, die in Fig. 2 beispielhaft schematisch angedeutet sind. Es ist auch zu erkennen, dass die Verstärkungsfäden 25, 26 im Verstärkungssystem 22 mehrlagig angeordnet sein können.

In der Beschreibung ist allgemein von einem Verstärkungsfaden die Rede, wenn wenigstens ein Verstärkungsschussfaden 25 und/oder wenigstens ein Verstärkungskettfaden 26 gemeint ist.

Bei den hier beschriebenen bevorzugten Ausführungsbeispielen des zweidimensionalen Gewebes 20 sind die Verstärkungsschussfäden 25 und die vorhandenen Verstärkungskettfäden 26 webtechnisch nicht unmittelbar miteinander gebunden. Das Halten der Verstärkungsschussfäden 25 bzw. der Verstärkungskettfäden 26 im Gewebe 20 erfolgt hier ausschließlich durch das Bindungssystem 21 mittels der Bindekettfäden 23 und der Bindeschussfäden 24. Die Bindeschussfäden 24 sind mit den Bindekettfäden 23 an Bindungsstellen 27 webtechnisch miteinander verbunden. Die Bindung kann jede beliebige Webbindung sein, beispielsweise eine Leinwandbindung, eine Köperbindung, eine Atlasbindung, eine Dreherbindung, usw. Mit Hilfe des Bindungssystems 21 wird das Verstärkungssystem 22 im zweidimensionalen Gewebe 20 gehalten.

Die Verstärkungsfäden 25, 26 bestehen aus einem Verstärkungsgarn. Die Bindefäden 23, 24 bestehen aus einem Bindegarn. Das Verstärkungsgarn kann sich im Hinblick auf das Material und/oder den Querschnitt und/oder den Titer vom Bindungsgarn unterscheiden. Das Verstärkungsgarn hat eine höhere Zugfestigkeit als das Bindegarn. Beim Ausführungsbeispiel ist das Verstärkungsgarn als Verstärkungsband ausgeführt und weist im Querschnitt in eine Dimension eine größere Abmessung auf - beispielsgemäß eine mindestens 4-mal 5-mal größere Abmessung - als die jeweils andere Dimension.

Das Verstärkungsgarn kann Karbonfasern und/oder Aramidfasern und/oder Glasfasern oder andere zugfeste Kunststoffmaterialien aufweisen. Das Verstärkungsgarn kann auch eine thermoplastische Matrix aufweisen. Das Bindegarn ist vorzugsweise als Kunststoffgarn ausgeführt, beispielsweise als Phenoxy-Garn.

In den Fig. 1 und 2 schematisch ist veranschaulicht, dass die Verstärkungsschussfäden 25 und die Bindeschussfäden 24 kreuzungsfrei nebeneinander in Schussfadenrichtung verlaufen. Vorzugsweise haben die Verstärkungsschussfäden 25 in Kettfadenrichtung K einen Abstand zueinander, wobei beispielsgemäß zwischen jeweils zwei benachbarten Verstärkungsschussfäden 25 jeweils ein Bindeschussfaden 24 angeordnet ist.

In Abwandlung zu dem bevorzugten Ausführungsbeispiel ist es auch möglich, dass die Verstärkungsschussfäden 25 zumindest an einer oder mehreren Stellen unmittelbar eine webtechnische Bindung mit einem der Bindekettfäden 23 aufweisen. Dadurch kann beispielsweise vor dem Anschlag des Verstärkungsschussfadens 25 an der Gewebekante eine vorläufige Sicherung des Verstärkungsschussfadens 25 in Schussfadenrichtung S erfolgen.

Die in Schussfadenrichtung S mit maximalem Abstand zueinander angeordneten Bindekettfäden 23 stellen die beiden äußersten Bindekettfäden 23 dar, die die Kettbaumbreite B definieren (Fig. 1). In Fig. 1 ist der Übersichtlichkeit halber nur ein Teil der Bindekettfäden 23 dargestellt. Zumindest ein Teil der Verstärkungsschussfäden 25 erstreckt sich nicht über die gesamte Kettbaumbreite B. Diese Verstärkungsschussfäden 25 werden als verkürzte Verstärkungsschussfäden 25a bezeichnet. Die verkürzten Verstärkungsschussfäden 25a haben demnach jeweils eine Fadenlänge L, die kleiner ist als die Kettbaumbreite B. Die Fadenlänge L ist lediglich beispielhaft für einen der verkürzten Verstärkungsschussfäden 25a in Fig. 1 eingetragen. Wie dort zu sehen ist, können die Fadenlängen L der vorhandenen verkürzten Verstärkungsschussfäden 25a unterschiedlich groß sein.

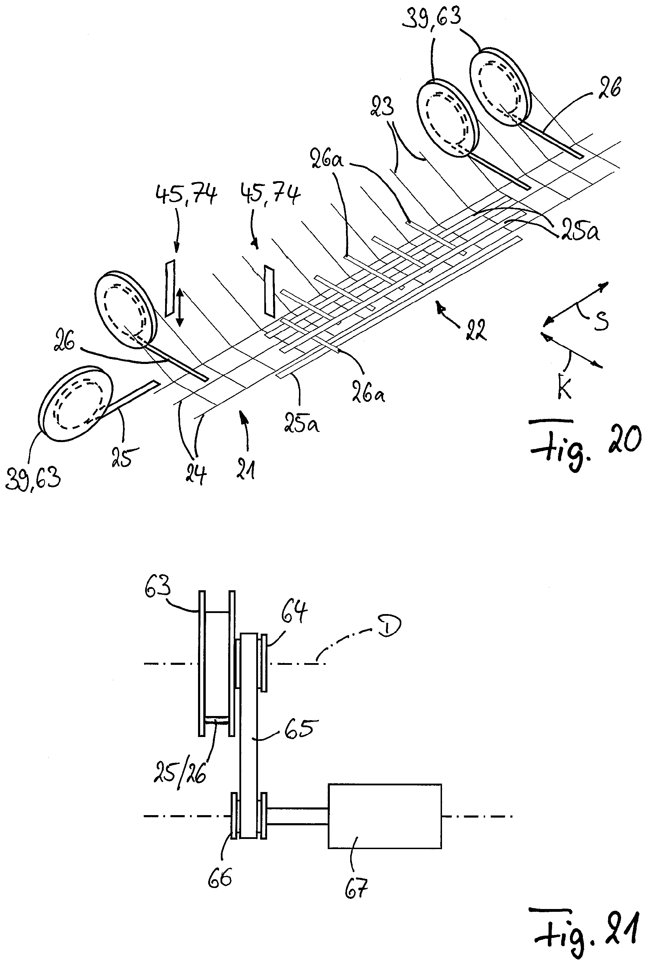

Analog hierzu sind auch einige der Verstärkungskettfäden 26 als verkürzte Verstärkungskettfäden 26a ausgeführt (Figur 20). Die verkürzten Verstärkungskettfäden 26a haben eine Fadenlänge L, die kürzer ist als das hergestellte Gewebe in Kettfadenrichtung K. Die verkürzten Verstärkungskettfäden 26a erstrecken sich mithin lediglich über einen Teilabschnitt des hergestellten zweidimensionalen Gewebes 20 in dessen Kettfadenrichtung K. Die verkürzten Verstärkungskettfäden 26a sind mithin kürzer als die Bindekettfäden 23 im zweidimensionalen Gewebe 20.

Jeder verkürzte Verstärkungsschussfaden 25a hat in Schussfadenrichtung S zwei freie Enden, wobei das eine Ende an einer ersten Fadenendposition 30 und das entgegengesetzte Ende an einer zweiten Fadenendposition 31 innerhalb der Kettbaumbreite B bzw. zwischen den beiden äußersten Bindekettfäden 23 angeordnet ist. Entsprechend hat ein verkürzter Verstärkungskettfaden 26a in Kettfadenrichtung K zwei freie Enden an den beiden Fadenendposition 30, 31. Die beiden Fadenendpositionen 30, 31 und die Fadenlänge L zwischen diesen beiden Fadenendpositionen 30, 31 eines verkürzten Verstärkungsfadens 25a, 26a ist in dem zweidimensionalen Gewebe 20 abhängig von dem herzustellenden dreidimensionalen Verbundwerkstoffteil vorgegeben. Das zweidimensionale Gewebe 20 ist daher an die daraus herzustellende dreidimensionale Form des 3D-Verbundwerkstoffteils angepasst. Dadurch vereinfachen sich die nachfolgenden Bearbeitungsschritte, insbesondere das Drapieren des zweidimensionalen Verbundwerkstoffteils in die gewünschte dreidimensionale Gestalt, um beispielsweise eine sogenannte Preform im Rahmen der Herstellung des Verbundwerkstoffteils herzustellen.

Dadurch, dass sowohl die Fadenendpositionen 30, 31 als auch die Fadenlänge L an die zu erzielende dreidimensionale Gestalt angepasst sind, entstehen nur wenig oder gar keine Schnittabfälle des Verstärkungsgarns. Da das Verstärkungsgarn häufig aus sehr teurem Material besteht, können auf diese Weise Kosten eingespart werden. Zum anderen ist eine aufwendige Nachbearbeitung und Formgebung durch Zurechtschneiden des Verstärkungssystems 22 nicht notwendig. Das Verstärkungssystem 22 mit den Verstärkungsfäden 25, 26 bzw. die verkürzten Verstärkungsfäden 25a, 26a befinden sich bereits genau in der Position, in der sie später bei dem Herstellen der Preform bzw. des dreidimensionalen Verbundwerkstoffteils benötigt werden. Bei dem Herstellen der Preform bzw. des dreidimensionalen Verbundwerkstoffteils kann es lediglich noch erforderlich sein, Teile des Bindungssystems 21 zu entfernen. Da das Bindungssystem für die Festigkeit des Verbundwerkstoffteils keine Rolle spielt und das Bindegarn verglichen mit dem Verstärkungsgarn kostengünstig ist, sind das Zurechtschneiden des Bindungssystems 21 und die dabei entstehenden Schnittabfälle unproblematisch.

In Fig. 1 sind beispielsweise schematisch verkürzte Verstärkungsschussfäden 25a dargestellt, aus denen eine sich konvex aus der Zeichenebene herauswölbende Form erzeugt werden kann, ohne dass Schnittabfälle der Verstärkungsschussfäden erforderlich wären.

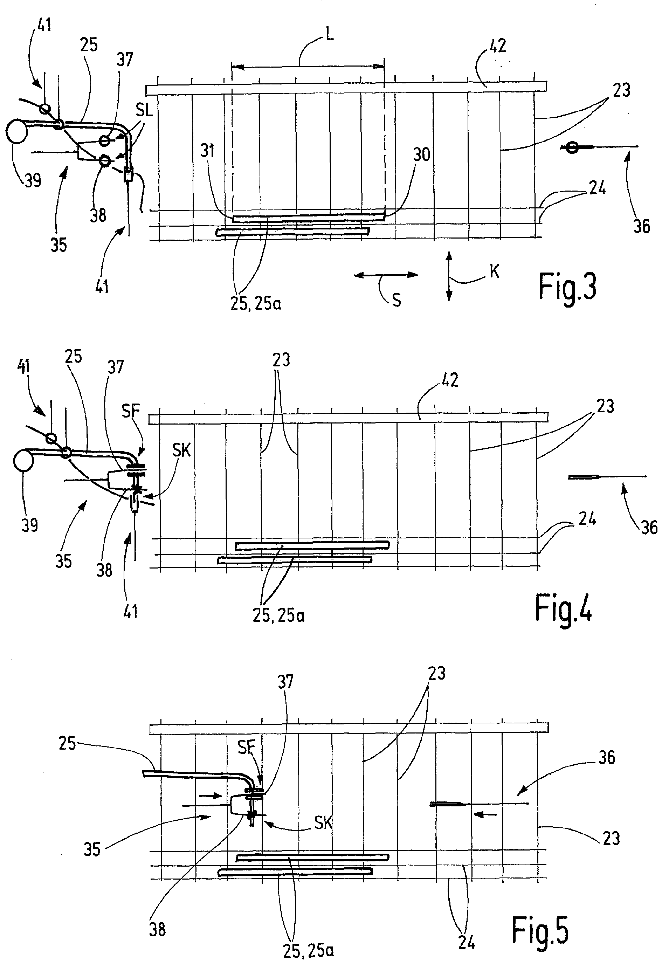

In den Fig. 3 bis 11 sind schematisch unterschiedliche Situationen bzw. Schritte eines Verfahrens zur Herstellung des zweidimensionalen Gewebes 20 stark schematisiert veranschaulicht. Nachfolgend wird das Herstellungsverfahren anhand dieser Zeichnungen erläutert.

Eine Webmaschine wird mit den Bindekettfäden 23, den Bindeschussfäden 24 sowie den Verstärkungsschussfäden 25 bestückt. Das Eintragen der Bindeschussfäden 24 erfolgt auf an sich bekannte Weise. Nachfolgend wird insbesondere das Eintragen und Positionieren der verkürzten Verstärkungsschussfäden 25a erläutert.

Zunächst wird ermittelt und der Webmaschine vorgegeben, wie die Verstärkungsschussfäden 25 und die verkürzten Verstärkungsschussfäden 25a innerhalb des Gewebes angeordnet werden sollen. Insbesondere werden dabei die Fadenendpositionen 30, 31 der Enden der verkürzten Verstärkungsschussfäden 25a sowie die jeweilige Fadenlänge L vorgegeben.

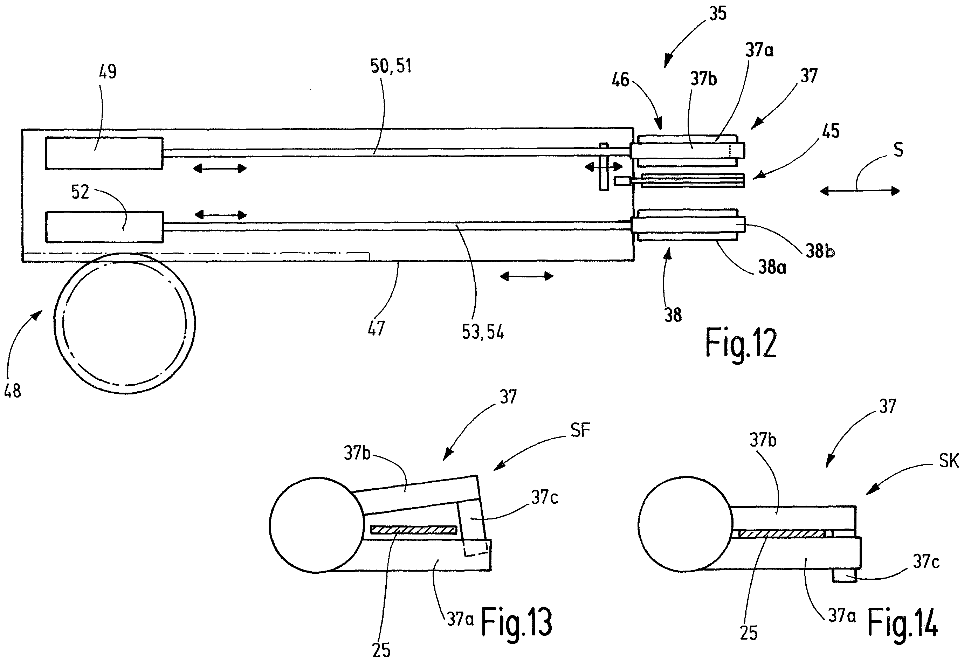

Zum Eintragen eines verkürzten Schussfadens 25a werden ein erster Greifer 35 und ein zweiter Greifer 36 verwendet. Der erste Greifer hat eine Halteeinrichtung 37 sowie beispielsgemäß eine Klemmeinrichtung 38. Die Halteeinrichtung 37 kann zwischen einer den Verstärkungsschussfaden 25 klemmend beaufschlagenden Klemmstellung SK (Fig. 14) und einer den Verstärkungsschussfaden 25 umgreifenden oder umschließenden Führungsstellung SF (Fig. 13) umgeschaltet werden. In der Führungsstellung SF kann der Verstärkungsschussfaden 25 in seiner Erstreckungsrichtung relativ zu der Halteeinrichtung 37 bewegt werden und wird lediglich daran gehindert, such quer zu seiner Erstreckungsrichtung vom ersten Greifer 35 weg zu bewegen. Die Halteeinrichtung 37 kann - so wie schematisch in Fig. 13 gezeigt - eine Art Öse bilden, durch die der Verstärkungsfaden 25 in der Führungsstellung SF hindurch verläuft, ohne dass er kraftschlüssig klemmend beaufschlagt wird.

Die Klemmeinrichtung 38 kann zwischen einer Lösestellung, in der sie den Verstärkungsschussfaden 25 freigibt, und einer Klemmstellung SK, in der sie den Verstärkungsschussfaden 25 klemmend beaufschlagt, umgeschaltet werden. Es ist auch möglich, dass die Halteeinrichtung 37 zusätzlich eine Lösestellung SL einnehmen kann, in der der Verstärkungsschussfaden 25 vollständig freigegeben wird.

In den Fig. 3 bis 8 ist die jeweilige Lösestellung SL durch einen Kreis symbolisiert. Die Klemmstellung SK ist durch ein Kreuz symbolisiert. Die Führungsstellung SF ist durch zwei parallele Linien symbolisiert.

Der erste Greifer 35 befindet sich auf einer Seite des herzustellenden zweidimensionalen Gewebes 20 bzw. auf einer Seite der Webmaschine. Auf dieser Seite ist auch ein Fadenvorrat 39 für den Verstärkungsschussfaden 25 angeordnet. Auf der in Schussfadenrichtung S gegenüberliegenden Seite befindet sich der zweite Greifer 36.

In der Ausgangssituation befindet sich die Halteeinrichtung 37 sowie die Klemmeinrichtung 38 in der Lösestellung SL (Fig. 3). Anschließend wird zum Eintragen eines Verstärkungsschussfadens das freie Ende des in dem Fadenvorrat 39 bevorrateten Verstärkungsschussfadens 25 ergriffen, beispielsgemäß durch die Klemmeinrichtung 38, die in ihre Klemmstellung SK umgeschaltet wird (Fig. 4).

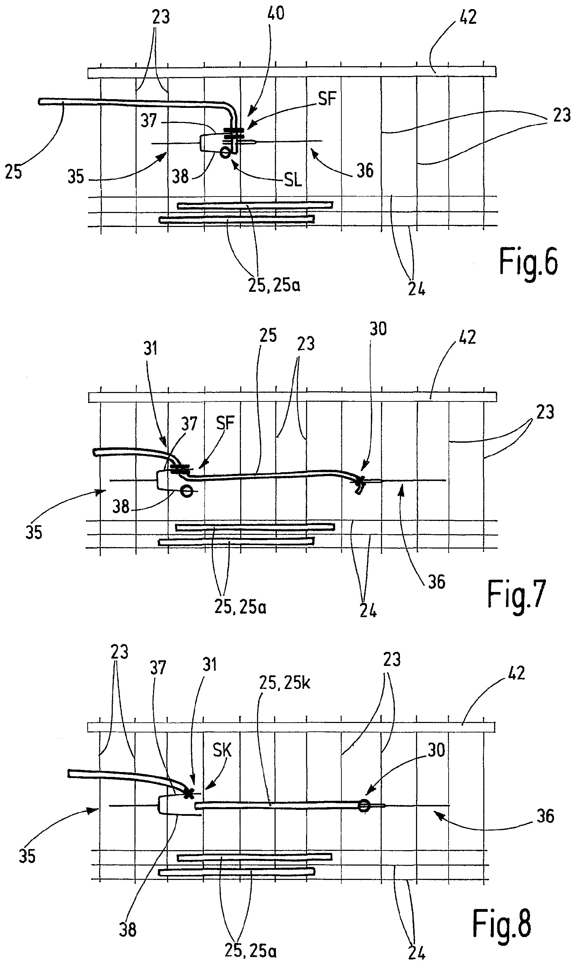

Nachfolgend wird das freie Ende des Verstärkungsschussfadens 25 mit Hilfe des ersten Greifers 35 in Schussfadenrichtung S in das geöffnete Fach eingetragen. Die Bindekettfäden 23 befinden sich dabei in einer vorgegebenen Eintragsposition. Diese hängt von der Art der Bindung mit den Bindeschussfäden 24 ab. Beim Ausführungsbeispiel wird sowohl der erste Greifer 35, als auch der zweite Greifer 36 in das geöffnete Fach hinein bewegt (Fig. 5), bis die beiden Greifer 35, 36 eine Übergabeposition 40 erreicht haben. In der Übergabeposition 40 ergreift der zweite Greifer 36 das freie Ende des Verstärkungsschussfadens 25. Die Klemmeinrichtung 38 des ersten Greifers 35 wird in ihre Lösestellung SL umgeschaltet. Spätestens zu diesem Zeitpunkt wird die Halteeinrichtung 37 in ihre Führungsstellung FS umgeschaltet, wobei der Verstärkungsschussfaden 25 durch die Halteeinrichtung 37 geführt hindurch verläuft (Fig. 6).

Wie es in den Fig. 4 und 5 schematisch veranschaulicht ist, kann die Halteeinrichtung 37 auch bereits vor der Übergabe des Verstärkungsschussfadens 25 an den zweiten Greifer 36 in ihre Führungsstellung SF umgeschaltet werden. Beispielsgemäß erfolgt dieses Umschalten bereits dann, wenn das freie Ende des Verstärkungsschussfadens 25 unmittelbar vor dem Eintragen in das Webfach durch den ersten Greifer 35 ergriffen wird. Dies hat den Vorteil, dass das sichere Umschließen des Verstärkungsschussfadens 25 durch die Halteeinrichtung 37 mit Hilfe von Zuführmitteln 41 sichergestellt werden kann, wie sie schematisch in den Fig. 3 und 4 veranschaulicht sind.

Die Übergabeposition 40 kann bei einer Ausführungsform mit der ersten Fadenendposition 30 des verkürzten Verstärkungsschussfadens 25a übereinstimmen. Bei dem hier veranschaulichten Ausführungsbeispiel, wird der zweite Greifer 36 vom ersten Greifer 35 weg aus der Übergabeposition 40 in die erste Fadenendposition 30 bewegt (Fig. 7). Gleichermaßen wird der erste Greifer 35 aus der Übergabeposition 40 in die zweite Fadenendposition 31 vom zweiten Greifer 36 weg bewegt. Während dieser Bewegung wird der Verstärkungsschussfaden 25 durch die Halteeinrichtung 37 geführt gehalten (Führungsstellung SF) ohne den Verstärkungsschussfaden 25 klemmend zu beaufschlagen.

Nachdem der erste Greifer 35 die zweite Fadenendposition 31 erreicht hat, wird die Halteeinrichtung 37 Führungsstellung SF in die Klemmstellung SK umgeschaltet. Im Anschluss daran wird der Verstärkungsfaden 25 an der zweiten Fadenendposition 31 durchtrennt. Gleichzeitig oder anschließend wird der eingetragene, verkürzte Verstärkungsschussfaden 25a durch den zweiten Greifer 36 an der ersten Fadenendposition 30 freigegeben (Fig. 8).

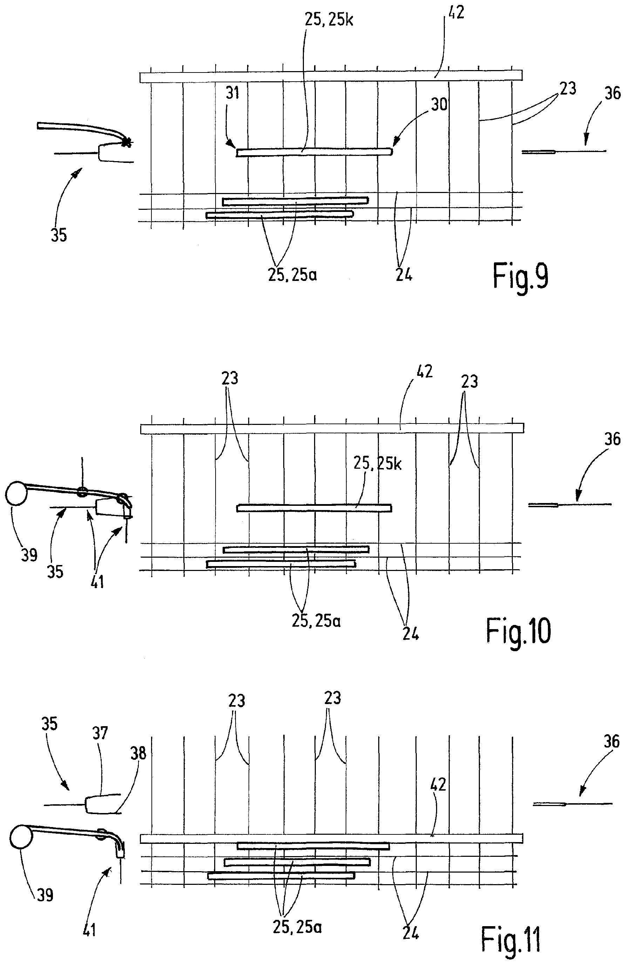

Nachfolgend können die beiden Greifer 35, 36 aus dem Webfach zurückgezogen werden. Der eingetragene verkürzte Verstärkungsschussfaden 25a erstreckt sich zwischen der ersten Fadenendposition 30 und der zweiten Fadenendposition 31 (Fig. 9).

Der erste Greifer 35 kann das freie Fadenende des mit dem Fadenvorrat 39 verbundenen Verstärkungsschussfadens 25 wieder den Zuführmitteln 41 übergeben (Fig. 10 und 11). Währenddessen kann der eingetragene verkürzte Verstärkungsschussfaden 25a mit Hilfe eines Webblattes 42 auf an sich bekannte Weise an die Gewebekante angeschlagen werden (Fig. 11) .

Anschließend wird beim Ausführungsbeispiel ein Bindeschussfaden 24 eingetragen und durch einen entsprechenden Fachwechsel mit dem Bindekettfäden 23 webtechnisch verbunden. Es ist alternativ auch möglich, vor dem Anschlagen des verkürzten Verstärkungsschussfadens den Bindeschussfaden 24 in das Webfach einzutragen. Dann können sowohl der eingetragene verkürzte Verstärkungsschussfaden 25a wie auch der Bindeschussfaden 24 über das Webblatt 42 angeschlagen werden.

Bei einer weiteren optionalen Ausgestaltung des Verfahrens kann der eingetragene verkürzte Verstärkungsschussfaden 25a vor dem Anschlagen mit dem Webblatt 42 vorläufig in seiner Position gesichert werden. Dies kann beispielsweise dadurch geschehen, dass lediglich ein Teil der Bindekettfäden einen Fach- bzw. Positionswechsel zur vorläufigen Sicherung des verkürzten Verstärkungsschussfadens 25a ausführt, so dass ein Verschieben der eingetragenen Schussfäden 25a bzw. 24 mit dem Webblatt 42 noch möglich ist, gleichzeitig aber ein Verschieben in Schussfadenrichtung S vermieden wird.

In Fig. 13 ist schematisch in einer blockschaltbildähnlichen Darstellung eine Ausführungsform eines ersten Greifers 35 veranschaulicht. Wie erläutert, weist der erste Greifer 35 die Halteeinrichtung 37, die Klemmeinrichtung 38 und eine Trenneinrichtung 45 auf. Die Halteeinrichtung 37, die Klemmeinrichtung 38 sowie die Trenneinrichtung 45 befinden sich an einem freien Ende 46 des ersten Greifers 35. Ausgehend von diesem freien Ende 46 erstreckt sich ein Greiferkörper 47 in Schussfadenrichtung S. Über einen Greiferantrieb 48 ist der erste Greifer 35 in Schussfadenrichtung S bewegbar. Beispielsweise kann der Greiferkörper 47 eine Verzahnung aufweisen, in die ein ebenfalls verzahntes Antriebsrad des Greiferantriebs 48 eingreift, so dass sich der Greiferkörper 47 bei einer Drehung des Antriebsrades in Schussfadenrichtung S bewegt.

An dem Greiferkörper 47 ist eine erste Betätigungseinheit 49 für die Halteeinrichtung 37 angeordnet und über ein erstes Kopplungsmittel 50, beispielsweise eine erste Kopplungsstange 51, mit der Halteeinrichtung 37 gekoppelt. Durch eine Bewegung der ersten Kopplungsstange 51 in Schussfadenrichtung S kann die Halteeinrichtung 37 zwischen ihren Stellungen umgeschaltet werden.

Eine stark schematisierte Darstellung der Halteeinrichtung 37 ist in den Fig. 13 und 14 wiedergegeben. Die Halteeinrichtung 37 weist einen ersten Haltebacken 37a und einen zweiten Haltebacken 37b auf, die relativ zueinander beweglich sind. In der Klemmstellung SK wird der Verstärkungsschussfaden 25 zwischen den beiden Haltebacken 37a und 37b kraftschlüssig gehalten (Fig. 14). In der Führungsstellung SF verläuft der Verstärkungsschussfaden 25 ohne klemmende Einwirkung zwischen den beiden Haltebacken 37a, 37b und wird von diesen in einer Umfangsrichtung umgriffen, so dass er nicht aus dem Bereich zwischen den beiden Haltebacken 37a, 37b gelangen kann. Hierfür kann beispielsweise zumindest an einem der beiden Klemmbacken 37a bzw. 37b ein Fortsatz 37c vorhanden sein, der außerhalb der Klemmstellung SK den seitlichen Spalt zwischen den beiden Haltebacken 37a, 37b schließt, wenn die Halteeinrichtung 37 die Führungsstellung SF einnimmt (Fig. 13). Die Lösestellung SL der Halteeinrichtung 37 ist nicht explizit veranschaulicht. In der Lösestellung SL ist der Abstand der beiden Haltebacken 37a, 37b so groß, dass eine Lücke entsteht und die Halteeinrichtung 37 quer zur Erstreckungsrichtung des Verstärkungsschussfadens 25 von diesem weg bewegt werden kann.

Der erste Greifer 35 weist außerdem eine zweite Betätigungseinheit 52 auf, die über ein zweites Kopplungsmittel 53, das beispielsgemäß durch eine zweite Kopplungsstange 54 gebildet ist, mit der Klemmeinheit 38 gekoppelt ist. Über die zweite Betätigungseinheit 52 und das zweite Kopplungsmittel 53 kann die Klemmeinrichtung 38 zwischen der Klemmstellung SK und der Lösestellung SL umgeschaltet werden. Die Klemmeinrichtung 38 kann analog zu der Halteeinrichtung zwei Klemmbacken 38a, 38b aufweisen, die relativ zueinander bewegbar sind und daher zwischen einer Klemmstellung SK und einer Lösestellung SL umgeschaltet werden können. Eine Führungsstellung SF ist bei der Klemmeinrichtung 38 nicht vorgesehen.

Die Trenneinrichtung 45 dient zum Durchtrennen des eingetragenen Verstärkungsschussfadens 25 an der zweiten Fadenendposition 31. Sie ist benachbart zur Halteeinrichtung 37 und beispielsgemäß zwischen der Halteeinrichtung 37 und der Klemmeinrichtung 38 angeordnet. Die Trenneinrichtung 45 wird dann betätigt, wenn die Halteeinrichtung 37 in ihrer Klemmstellung SK umgeschaltet wird. Daher ist es möglich, die Trenneinrichtung 45 mit der ersten Betätigungseinheit 49 bzw. dem ersten Kopplungsmittel 45 zu koppeln, so dass nach dem Erreichen der Klemmstellung SK eine Betätigung der Trenneinrichtung 45 erfolgt, um den Verstärkungsschussfaden 25 zu durchtrennen. Eine solche Kopplung ist schematisch in Fig. 12 veranschaulicht. Alternativ ist es auch möglich, eine separate dritte Betätigungseinheit vorzusehen, die mit der Trenneinrichtung 45 gekoppelt ist.

Wie schematisch in Fig. 12 veranschaulicht, sind die Kopplungsmittel 50, 53 durch jeweils eine Kopplungsstange 51, 54 gebildet, die am Greiferkörper 47 angeordnet sind. Die Kopplungsstangen 51, 54 können zumindest in einem Abschnitt von außen zugänglich sein und durch Antriebsräder in ihrer Erstreckungsrichtung relativ zum Greiferkörper 47 bewegt werden, um dadurch eine betreffende Betätigung bzw. ein betreffendes Umschalten der zugeordneten Einrichtung 37, 38, 45 zu veranlassen. Es versteht sich, dass auch andere Kopplungsmittel, beispielsweise Riemen oder drehbare Wellen oder dergleichen vorgesehen sein können. Die Ausgestaltung des ersten Greifers 35 mit einer Klemmeinrichtung 38 und einer zwischen einer Führungsstellung SF und einer Klemmstellung SK umschaltbaren Halteeinrichtung 37 als zentrale Hauptmerkmale, kann auch unabhängig von dem hier beschriebenen erfindungsgemäßen Verfahren bzw. der erfindungsgemäßen Ausführung des zweidimensionalen Gewebes 20 eingesetzt werden.

Mittels des vorstehend beschriebenen Verfahrens unter Verwendung der Greifer 35, 36 könnte auch ein Verstärkungskettfaden 26 eingetragen und an den vorgegebenen Fadenendpositionen 30, 31 positioniert bzw. gegebenenfalls abgetrennt werden, um einen verkürzten Verstärkungskettfaden 26a zu bilden.

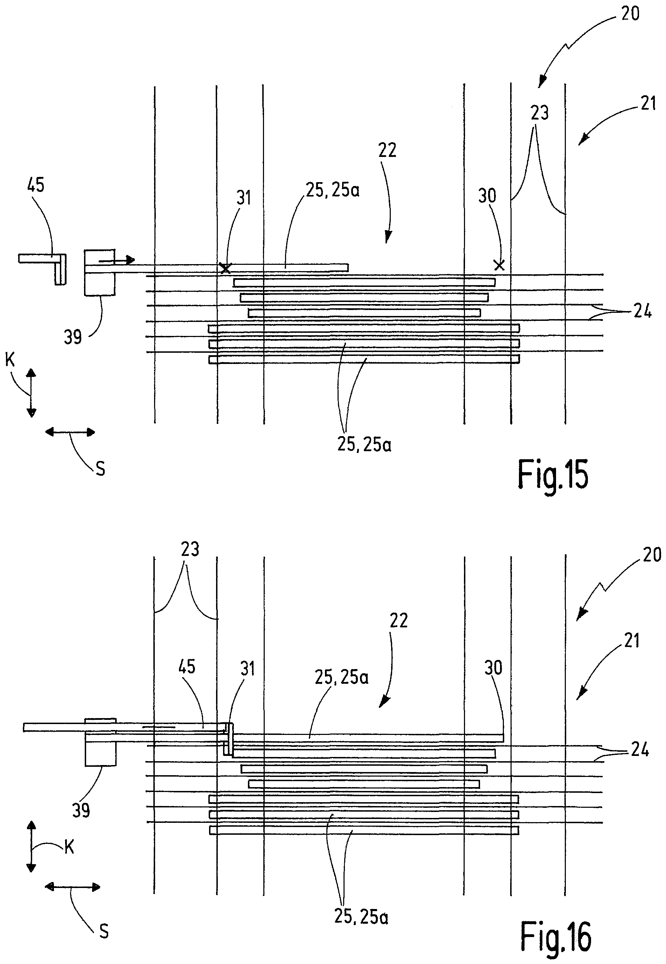

Bei einem anderen Verfahren kann ein schiebesteifer Verstärkungsfaden 25, 16 bzw. verkürzter Verstärkungsfaden 25a, 26a ohne die beiden Greifer eingetragen werden, was anhand der Figuren 15 bis 21 nachfolgend erläutert wird.

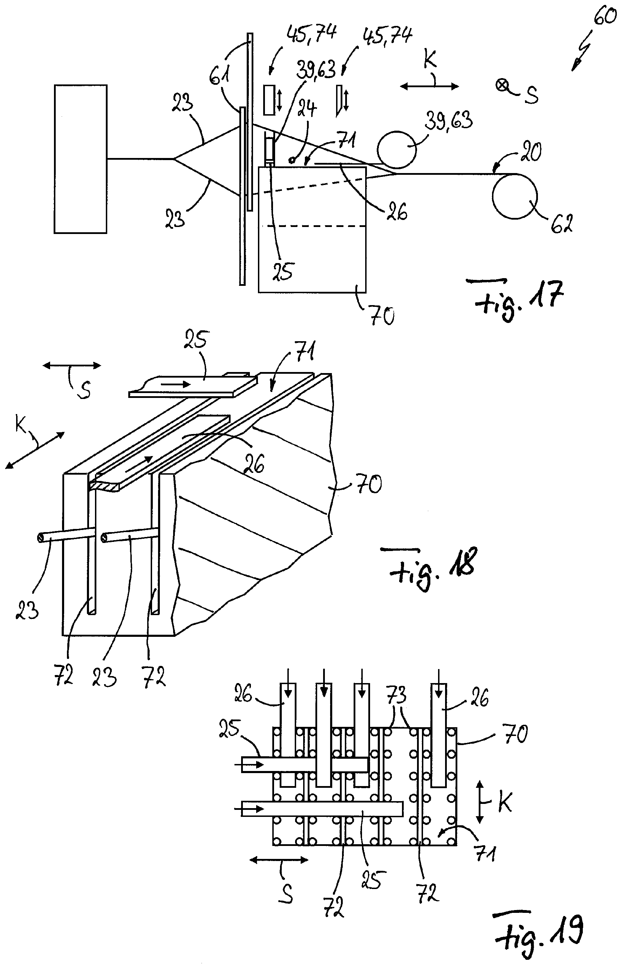

In Figur 17 ist schematisch das Prinzip einer Webmaschine 60 mit Webschäften 61 veranschaulicht, von denen der Einfachheit halber schematisch lediglich zwei Webschäfte 61 veranschaulicht sind. Die Anzahl der Webschäfte 61 wird abhängig von der herzustellenden Bindung und dem herzustellenden Gewebe variiert. Über die Webschäfte 61 werden die Bindekettfäden 23 geführt. Abhängig von der Stellung der Webschäfte 61 wird ein entsprechendes Webfach im Bindesystem 21 geöffnet bzw. geschlossen.

Zwischen einem Gewebeabzug 62 und den Webschäften 61 ist für jeden Verstärkungsfaden 25, 26 ein Fadenvorrat 39 vorhanden, der als Spule 63 ausgeführt ist. Jede der Spulen 63 ist separat und unabhängig von den anderen Spulen 63 um ihre Drehachse D antreibbar. Beispielsweise kann jede Spule 63 ein Abtriebsrad 64 aufweisen, das über einen Riemen 65 oder ein anderes Koppelelement mit einem Antriebsrad 66 antriebsverbunden ist (Figur 21). Das Antriebsrad 66 wird über einen Motor 67 angetrieben. Der Motor 67 kann mithin entfernt von der Drehachse D der Spule 63 angeordnet werden.

Es können auch andere bekannte Antriebe zum Antreiben der Spulen verwendet werden.

In Figur 20 sind schematisch mehrere Spulen 63 dargestellt, die jeweils einen Verstärkungskettfaden 26 bevorraten. Diese Spulen 63 können drehbar auf einer gemeinsamen Welle gelagert sein, sind jedoch auch in diesem Fall individuell und unabhängig voneinander antreibbar.

Durch eine Drehung einer Spule 63 wird der betreffende Verstärkungsfaden 25, 26 abgewickelt und im Bereich des Webfachs auf die Bindekettfäden 23 bzw. die Bindeschussfäden 24 abgelegt.

Bei einer weiteren Ausführungsform kann zur Abstützung der Verstärkungsfäden 25, 26 ein Stützkörper 70 vorhanden sein. Der Stützkörper 70 ist schematisch in den Figuren 17-19 veranschaulicht. An seiner Oberseite weist der Stützkörper 70 eine Auflagefläche 71 für die Verstärkungsfäden 25, 26 auf. Die Auflagefläche 71 erstreckt sich vorzugsweise in einer Horizontalebene. In Kettfadenrichtung K ist die Auflagefläche mit Schlitzen 72 durchbrochen. Die Schlitze 72 sind zur Auflagefläche 71 hin sowie in Kettfadenrichtung K an der Vorderseite und der Rückseite des Stützkörpers 70 offen. Die Schlitze 72 sind breiter als die Stärke eines Bindekettfadens 73. Sie sind in Schussfadenrichtung S im entsprechenden Abstand der Bindekettfäden 23 angeordnet. Wie es in den Figuren 17 und 18 veranschaulicht ist, kann bei der Webfachbildung jeweils ein Bindekettfaden 23 in einen Schlitz 72 eintauchen und den Stützkörper 70 durch den Schlitz 72 durchsetzen. Gleichzeitig ist oberhalb im Bereich des Webfaches die Auflagefläche 71 für die Verstärkungsfäden 25, 26 vorhanden. Beim Abwickeln und Schieben der Verstärkungsfäden 25, 26 von den Spulen 63 gleiten diese entlang der Auflagefläche 71 in die gewünschte Position.

Die Verstärkungskettfäden 26 und die Verstärkungsschussfäden 25 können auf der Auflagefläche 71 auch übereinander geschoben werden, wie es schematisch in Figur 19 veranschaulicht ist. Durch die Reihenfolge des Aufschiebens auf die Auflagefläche 71 kann dabei die entsprechende Anordnung der Verstärkungsfäden 25, 26 als Gelege und/oder als Gewebe des Verstärkungssystems 22 erzeugt werden.

Zur verbesserten Führung der Verstärkungsfäden 25, 26 auf der Auflagefläche 71 können dort Führungselemente und beispielsweise zylindrische Führungsstifte 73 angeordnet sein, die rechtwinklig zur Auflagefläche 71 vorstehen. Die Führungselemente können auch eine andere Gestalt haben, beispielsweise durch eine halbkugelförmige Form oder dergleichen. Die beispielsgemäß vorhandenen Führungsstifte 73 sind in Kettfadenrichtung K auf beiden Seiten eines jeweiligen Schlitzes 72 angeordnet. Eine weitere Reihe von Führungsstiften 73 kann am jeweiligen Außenrand der Auflagefläche 71 vorhanden sein. Jeweils zwei in Kettfadenrichtung K unmittelbar benachbarte Reihen von Führungsstiften 73 bilden eine Führungsbahn für einen Verstärkungsschussfaden 25. Jeweils zwei in Schussfadenrichtung S benachbarte und zwischen zwei Schlitzen 72 angeordnete Reihen von Führungsstiften 73 bilden jeweils eine Führungsbahn für einen Verstärkungskettfaden 26. Die Führungselemente und beispielsgemäß die Führungsstifte 73 erzeugen somit ein Raster auf der Auflagefläche 71, das zur Positionierung, Führung und seitlichen Abstützung der Verstärkungsfäden 25, 26 dient.

Das freie Ende des schiebesteifen Verstärkungsfadens 25, 26 bzw. des verkürzten Verstärkungsfadens 25a, 26a wird aus dem Fadenvorrat 39 transportiert, beispielsweise von der Spule 63 abgewickelt, und bis zu der ersten Fadenendposition 30 eingeschoben. Der schiebesteifer Verstärkungsfaden 25, 26 ist in seiner Erstreckungsrichtung ausreichend steif, so dass er nicht gezogen werden muss, sondern durch eine geeignete Fördereinrichtung geschoben werden kann. Die Fördereinrichtung kann, wie bei dem hier beschriebenen Beispiel, durch einen antreibbaren Fadenvorrat 39 oder einen anderen geeigneten Antrieb, beispielsweise eine antreibbaren Spule 63, gebildet sein. Ein Ziehen durch einen Greifer ist hier nicht vorgesehen. Das freie Ende des verkürzten Verstärkungsfadens 25a, 26a wird durch die Fördereinrichtung bzw. den Fadenvorrat 39 bzw. die Spule 63 bis zu der ersten Fadenendposition 30 geschoben.

Anschließend wird der verkürzte Verstärkungsschussfaden 25a an bzw. benachbart zu der zweiten Fadenendposition 31 durch die Trenneinrichtung 45 durchtrennt. Das Trennen an der zweiten Fadenendposition 31 kann durch die Trenneinrichtung 45 koordiniert mit dem Antrieb der Fördereinrichtung bzw. der Spule 63 erfolgen. Dabei kann das Trennen erfolgen, sobald das freie Ende die ersten Fadenendposition 30 erreicht hat und/oder wenn der Antrieb der Fördereinrichtung bzw. der Spule 63 seine Drehrichtung umkehrt. Die Drehrichtungsumkehr kann das Durchtrennen erleichtern. Durch die Drehrichtungsumkehr kann ein Fadenabschnitt zwischen der Fördereinrichtung bzw. der Spule 63 und der zweiten Fadenendposition 31 wieder zurück gefördert werden, insbesondere auf die Spule 63 aufgewickelt werden.

Die Trenneinrichtung 45 kann in Schussfadenrichtung S und/oder in Kettfadenrichtung K an der zweiten Fadenendposition 31 positionierbar sein. Es ist auch möglich, jeder Fördereinrichtung bzw. Spule 63 eine Trenneinrichtung 45 zuzuordnen. Die Trenneinrichtung 45 kann auch gemeinsam mit der zugeordneten Fördereinrichtung bzw. Spule 63 bewegbar bzw. positionierbar angeordnet sein.

Als Trenneinrichtung 45 ist bei der Webmaschine 60 wenigstens ein Schneidmesser 74 vorhanden. Dabei kann jedem Fadenvorrat 39 bzw. jeder Spule 63 ein separates Schneidmesser 74 zugeordnet sein. Bei einem Ausführungsbeispiel ist es auch möglich, dass ein Schneidmesser 74 zur Trennung des wenigstens einen Verstärkungsschussfadens 25 und ein weiteres Schneidmesser 74 zum Trennen des wenigstens einen Verstärkungskettfadens 26 vorhanden ist (Figur 20). In diesem Fall sind die Schneidmesser 74 in Kettfadenrichtung K und in Schussfadenrichtung S bewegbar. Wenn jeder Spule 63 ein separates Schneidmesser 74 zugeordnet ist, reicht es aus, wenn das jeweils zugeordnete Schneidmesser 74 für einen Verstärkungskettfaden 26 in Kettfadenrichtung K und für einen Verstärkungsschussfaden 25 in Schussfadenrichtung S positionierbar ist. Zum Durchtrennen des betreffenden Verstärkungsfadens 25, 26 sind die Schneidmesser 74 zusätzlich in eine Vertikalrichtung bewegbar. Sie können zum Durchtrennen der Verstärkungsfäden 25, 26 mit dem Stützkörper 70 zusammenwirken.

Alternativ zu den Schneidmessern 74 ist es auch möglich, wenigstens eine scherenartige Trenneinrichtung 45 vorzusehen.

Vorstehend wurden Ausführungsbeispiele von Verfahren erläutert, um Verstärkungsschussfäden 25 einzubringen. Auf dieselbe Weise können jeweils auch Verstärkungskettfäden 26 in das Verstärkungssystem 22 des Gewebes 20 eingebracht werden.

Die Erfindung betrifft ein zweidimensionales Gewebe 20 sowie ein Verfahren zu dessen Herstellung. Das zweidimensionale Gewebe 20 wird dazu verwendet, ein dreidimensionales Verbundwerkstoffteil herzustellen. Das zweidimensionale Gewebe hat ein Bindungssystem 21 mit Bindekettfäden 23 und/oder Bindeschussfäden 24 sowie ein Verstärkungssystem 22 mit Verstärkungsschussfäden 25 und/oder Verstärkungskettfäden 26. Zumindest ein Teil der eingetragenen Verstärkungsfäden 25 sind als verkürzte Verstärkungsschussfäden 25a und/oder verkürzte Verstärkungskettfäden 26a ausgeführt. Deren Fadenlänge L ist kleiner als die Bindeschussfäden 24 bzw. Bindekettfäden 23. Der verkürzte Verstärkungsfaden 25a, 26a erstreckt sich zwischen seinen freien Enden, die sich in einer jeweiligen Fadenendposition 30 bzw. 31 befinden. Die jeweilige Fadenlänge L und die jeweiligen Fadenendpositionen 30, 31 eines verkürzten Verstärkungsfadens 25a, 26a sind in dem zweidimensionalen Gewebe 20 vorherbestimmt durch die dreidimensionale Form des herzustellenden Verbundwerkstoffteils. Somit lassen sich Zuschnittabfälle bei der Herstellung von Preforms und Zuschneideaufwand der Verstärkungsfäden 25, 26 verringern.

### Bezugszeichenliste:

- 20: zweidimensionales Gewebe
- 21: Bindungssystem
- 22: Verstärkungssystem
- 23: Bindekettfaden
- 24: Bindeschussfaden
- 25: Verstärkungsschussfaden
- 25a: verkürzter Verstärkungsschussfaden
- 26: Verstärkungskettfaden
- 26a: verkürzter Verstärkungskettfaden
- 27: Bindungsstelle

- 30: erste Fadenendposition
- 31: zweite Fadenendposition

- 35: erster Greifer
- 36: zweiter Greifer
- 37: Halteeinrichtung
- 37a: erster Haltebacken
- 37b: zweiter Haltebacken
- 37c: Fortsatz
- 38: Klemmeinrichtung
- 38a: erste Klemmbacke
- 38b: zweite Klemmbacke
- 39: Fadenvorrat
- 40: Übergabeposition
- 41: Zuführmittel

- 45: Trenneinrichtung
- 46: freies Ende des ersten Greifers
- 47: Greiferkörper
- 48: Greiferantrieb
- 49: erste Betätigungseinheit
- 50: erstes Kopplungsmittel
- 51: erste Kopplungsstange
- 52: zweite Betätigungseinheit
- 53: zweites Kopplungsmittel
- 54: zweite Kopplungsstange

- 60: Webmaschine
- 61: Webschaft
- 62: Gewebeabzug
- 63: Spule
- 64: Abtriebsrad
- 65: Riemen
- 66: Antriebsrad
- 67: Motor

- 70: Stützkörper
- 71: Auflagefläche
- 72: Schlitz
- 73: Führungsstift
- 74: Schneidmesser

- B: Kettbaumbreite
- D: Drehachse
- K: Kettfadenrichtung
- L: Fadenlänge
- S: Schussfadenrichtung
- SF: Führungsstellung
- SK: Klemmstellung
- SL: Lösestellung

## Patentansprüche

1. Zweidimensionales Gewebe (20) zur Verwendung bei der Herstellung eines dreidimensionalen Verbundwerkstoffteils,
mit Verstärkungsschussfäden (25) und Verstärkungskettfäden (26) aus einem Verstärkungsgarn, die zu einem Verstärkungssystem (22) gehören,
mit Bindekettfäden (23) aus einem sich von dem Verstärkungsgarn unterscheidenden Bindegarn, die zu einem Bindungssystem (21) gehören und die sich einer Kettfadenrichtung (K) erstrecken,
wobei das Verstärkungsgarn eine höhere Zugfestigkeit aufweist als das Bindegarn,
wobei der Abstand zwischen den beiden rechtwinkelig zur Kettfadenrichtung (K) mit maximalem Abstand angeordneten äußersten Bindekettfäden (23) eine Kettbaumbreite (B) definiert,
wobei zumindest einige der Verstärkungsschussfäden (25) und der Verstärkungskettfäden (26) als verkürzte Verstärkungsfäden (25a, 26a) ausgeführt sind, die entweder eine Fadenlänge (L) aufweisen, die kleiner ist als die Kettbaumbreite (B) oder kleiner als die Länge des hergestellten Gewebes (20) in Kettfadenrichtung (K),
und wobei die Fadenendpositionen (30, 31) der Enden der verkürzten Verstärkungsfäden (25a, 26a) und deren Fadenlänge (L) abhängig von dem herzustellenden dreidimensionalen Verbundwerkstoffteil bestimmt ist.

2. Zweidimensionales Gewebe nach Anspruch 1,
**dadurch gekennzeichnet, dass** das Verstärkungsgarn als Verstärkungsband ausgeführt sind.

3. Zweidimensionales Gewebe nach Anspruch 1 oder 2,
**dadurch gekennzeichnet, dass** die Verstärkungskettfäden (26) und die Bindekettfäden (23) kreuzungsfrei angeordnet sind und/oder dass das Bindungssystem (21) Bindeschussfäden (24) aufweist, wobei die Verstärkungsschussfäden (25) und die Bindeschussfäden (24) kreuzungsfrei angeordnet sind.

4. Zweidimensionales Gewebe nach Anspruch 3,
**dadurch gekennzeichnet, dass** die Bindeschussfäden (24) aus Bindegarn hergestellt sind.

5. Zweidimensionales Gewebe nach Anspruch 3 oder 4 ,
**dadurch gekennzeichnet, dass** die Verstärkungsschussfäden (25) und/oder Verstärkungskettfäden (26) ohne eine webtechnische Bindungsstelle mit den Bindekettfäden (23) und Bindeschussfäden (24) des Bindungssystems (21) angeordnet sind und durch das Bindungssystem (21) gehalten werden.

6. Zweidimensionales Gewebe nach einem der Ansprüche 1 bis 4,
**dadurch gekennzeichnet, dass** die Verstärkungsschussfäden (25) und/oder Verstärkungskettfäden (26) jeweils wenigstens eine Bindungsstelle aufweisen, an der sie unmittelbar mit einem der Bindekettfäden (23) oder Bindeschussfäden (24) des Bindungssystems (21) gebunden sind.

7. Verfahren zur Herstellung eines zweidimensionalen Gewebes (20) mit folgenden Schritten:
- Bestücken einer Webmaschine mit Verstärkungsschussfäden (25) und Verstärkungskettfäden (26) aus einem Verstärkungsgarn, die zu einem Verstärkungssystem (22) gehören,
- Bestücken der Webmaschine mit Bindekettfäden (23) aus einem sich von dem Verstärkungsgarn unterscheidenden Bindegarn, die zu einem Bindungssystem (21) gehören und die sich einer Kettfadenrichtung (K) erstrecken, wobei der Abstand zwischen den beiden rechtwinkelig zur Kettfadenrichtung (K) mit maximalem Abstand angeordneten äußersten Bindekettfäden (23) eine Kettbaumbreite (B) definiert
- Bestimmen der Anzahl und Position der Verstärkungsschussfäden (25) und der Verstärkungskettfäden (26) in dem zweidimensionalen Gewebe (20) abhängig von einer Gestalt eines herzustellenden dreidimensionalen Verbundwerkstoffteiles, wobei zumindest einige der Verstärkungsschussfäden (25) und der Verstärkungskettfäden (26) als verkürzte Verstärkungsfäden (25a, 26a) ausgeführt sind, die eine Fadenlänge (L) aufweisen, die kleiner ist als die Kettbaumbreite (B) oder oder kleiner als die Länge des hergestellten Gewebes (20) in Kettfadenrichtung (K), und wobei Fadenendpositionen (30, 31) der beiden Enden jedes verkürzten Verstärkungssfadens (25a, 26a) und dessen jeweilige Fadenlänge (L) abhängig von dem herzustellenden dreidimensionalen Verbundwerkstoffteil bestimmt und der Webmaschine vorgegeben wird,
- Positionieren von Webschäften der Webmaschine in einer Eintragstellung zum Eintragen wenigstens eines Verstärkungsschussfadens (25) oder wenigstens eines Verstärkungskettfadens (26),
- Eintragen eines freien Endes eines Verstärkungsschussfadens (25) oder Verstärkungskettfadens (26) aus einem Fadenvorrat (39) bis zu einer ersten Fadenendposition (30) des jeweiligen Verstärkungsfadens (25, 26),
- Durchtrennen des eingetragenen Verstärkungsfadens (25, 26) an der zweiten Fadenendposition (31),
- Fixieren des eingetragenen Verstärkungsfadens (25, 26) mittels des Bindungssystems (21).

8. Verfahren zur Herstellung eines zweidimensionalen Gewebes (20) nach Anspruch 7,
**dadurch gekennzeichnet, dass** der wenigstens eine Verstärkungsschussfaden (25) und/oder der wenigstens eine Verstärkungskettfaden (26) schiebend bewegt wird, bis sein freie Ende die erste Fadenendposition (30) erreicht hat.

9. Verfahren zur Herstellung eines zweidimensionalen Gewebes (20) nach Anspruch 8,
**dadurch gekennzeichnet, dass** der bis zu der ersten Fadenendposition eingeschobene Verstärkungsfaden (25, 26) mittels einer bewegbaren Trenneinrichtung (45) an der zweiten Fadenendposition (31) durchtrennt wird.

10. Verfahren zur Herstellung eines zweidimensionalen Gewebes (20) nach Anspruch 9,
**dadurch gekennzeichnet, dass** das Schieben des Verstärkungsfadens (25, 26) durch Abwickeln des Verstärkungsfadens (25, 26) von einer drehend um eine Drehachse (D) antreibbaren Spule (63) erfolgt.

11. Verfahren zur Herstellung eines zweidimensionalen Gewebes (20) nach einem der Ansprüche 8 bis 10,
**dadurch gekennzeichnet, dass** eine Auflagefläche (71) zum Abstützen des wenigstens einen Verstärkungsfadens (25, 26) beim Schieben vorhanden ist.

12. Verfahren zur Herstellung eines zweidimensionalen Gewebes (20) nach Anspruch 7 unter Verwendung von wenigstens einem Greifer (35, 36):
- Eintragen des freien Endes des Verstärkungsschussfadens (25) aus dem Fadenvorrat (39) mit einem ersten Greifer (35) bis zu der ersten Fadenendposition (30) des Verstärkungsschussfadens (25) oder bis zu einer Übergabeposition (40) und Übergabe des freien Endes des Verstärkungsschussfadens (25) an einen zweiten Greifer (36),
- Bewegen des ersten Greifers (35) bis zu der zweiten Fadenendposition (31) des Verstärkungsschussfadens (25) und Festhalten des Verstärkungsschussfadens (25) benachbart zu der zweiten Fadenendposition (31),
- Durchtrennen des Verstärkungsschussfadens (25) an der zweiten Fadenendposition (31),
- Bewegen des ersten Greifers (35) mit dem freien Ende des mit dem Fadenvorrat (39) verbundenen Verstärkungsschussfadens (25) von der zweiten Fadenendposition (31) weg,
- Fixieren des eingetragenen Verstärkungsschussfadens (25) mittels des Bindungssystems (21).

13. Verfahren nach Anspruch 12,
**dadurch gekennzeichnet, dass** der zweite Greifer (36) von der Übergabeposition (40) in die erste Fadenendposition (30) des Verstärkungsschussfadens (25) bewegt wird, wenn die Übergabeposition (40) nicht mit der ersten Fadenendposition (30) des Verstärkungsschussfadens (25) übereinstimmt.

14. Verfahren nach Anspruch 13,
**dadurch gekennzeichnet, dass** sich der zweite Greifer (36) bei seiner Bewegung von der Übergabeposition (40) in die erste Fadenendposition (30) des Verstärkungsschussfadens (25) vom ersten Greifer (35) weg bewegt.

15. Verfahren nach einem der Ansprüche 12 bis 14,
**dadurch gekennzeichnet, dass** der erste Greifer (35) eine Halteeinrichtung (37) aufweist, die zwischen einer den Verstärkungsschussfaden (25) klemmend beaufschlagenden Klemmstellung (SK) und einer den Verstärkungsschussfaden (25) lose umgreifenden Führungsstellung (SF) umschaltbar ist.

16. Verfahren nach Anspruch 15,
**dadurch gekennzeichnet, dass** die Halteeinrichtung (37) von der Führungsstellung (SF) in die Klemmstellung (SK) umgeschaltet wird, wenn der erste Greifer (35) die zweite Fadenendposition (31) des Verstärkungsschussfadens (25) erreicht hat.

17. Verfahren nach einem der Ansprüche 12 bis 16,
**dadurch gekennzeichnet, dass** der erste Greifer (35) eine Trenneinrichtung (45) aufweist.

18. Verfahren nach Anspruch 15 oder 16 und nach Anspruch 15,
**dadurch gekennzeichnet, dass** die Trenneinrichtung (45) betätigt wird, nachdem der erste Greifer (35) die zweite Fadenendposition (31) des Verstärkungsschussfadens (25) erreicht hat und die Halteeinrichtung (37) von der Führungsstellung (SF) in die Klemmstellung (SK) umgeschaltet wurde.

19. Verfahren nach einem der Ansprüche 12 bis 18,
**dadurch gekennzeichnet, dass** das Fixieren des eingetragenen Verstärkungsschussfadens (25) in mehreren Schritten erfolgt:
- Sichern des eingetragenen Verstärkungsschussfadens (25) durch einen Fachwechsel von einem oder mehreren Bindekettfäden (23),
- Anschlag des Verstärkungsschussfadens (25),
- Fachwechsel von einem oder mehreren weiteren Bindekettfäden (23) zur Fixierung des Verstärkungsschussfadens (25).

## Claims

1. Two-dimensional fabric (20) for use in production of a three-dimensional composite material part,
with reinforcing weft threads (25) and reinforcing warp threads (26) of a reinforcing yarn, which belong to a reinforcing system (22),
with binding warp threads (23) of a binding yarn differing from the reinforcing yarn, which belong to a binding system (21) and extend in a warp thread direction (K), wherein the reinforcing yarn has a higher tensile strength than the binding yarn, wherein the distance between the two outermost binding warp threads (23), arranged with maximal spacing at right angles to the warp thread direction (K), defines a warp beam width (B),
wherein at least some of the reinforcing weft threads (25) and the reinforcing warp threads (26) are configured as shortened reinforcing threads (25a, 26a) which have a thread length (L) which is either smaller than the warp beam width (B) or smaller than the length of the produced fabric (20) in the warp thread direction (K),
and wherein the thread end positions (30, 31) of the ends of the shortened reinforcing threads (25a, 26a) and their thread length (L) are determined depending on the three-dimensional composite material part to be produced.

2. Two-dimensional fabric according to claim 1, **characterised in that** the reinforcing yarn is configured as a reinforcing tape.

3. Two-dimensional fabric according to claim 1 or 2, **characterised in that** the reinforcing warp threads (26) and the binding warp threads (23) are arranged without crossing, and/or that the binding system (21) comprises binding weft threads (24), wherein the reinforcing weft threads (25) and the binding weft threads (24) are arranged without crossing.

4. Two-dimensional fabric according to claim 3, **characterised in that** the binding weft threads (24) are made of binding yarn.

5. Two-dimensional fabric according to claim 3 or 4, **characterised in that** the reinforcing weft threads (25) and/or reinforcing warp threads (26) are arranged without a woven binding point with the binding warp threads (23) and binding weft threads (24) of the binding system (21), and are held by the binding system (21).

6. Two-dimensional fabric according to any of claims 1 to 4, **characterised in that** the reinforcing weft threads (25) and/or reinforcing warp threads (26) each have at least one binding point at which they are bonded directly to one of the binding warp threads (23) or binding weft threads (24) of the binding system (21).

7. Method for producing a two-dimensional fabric (20) with the following steps:
- equipping a weaving loom with reinforcing weft threads (25) and reinforcing warp threads (26) of a reinforcing yarn, which belong to a reinforcing system (22),
- equipping the weaving loom with binding warp threads (23) of a binding yarn differing from the reinforcing yarn, which belong to a binding system (21) and extend in a warp thread direction (K), wherein the distance between the two outermost binding warp threads (23), arranged with maximal spacing at right angles to the warp thread direction (K), defines a warp beam width (B),
- determining the number and position of the reinforcing weft threads (25) and the reinforcing warp threads (26) in the two-dimensional fabric depending on a form of a three-dimensional composite material part to be produced, wherein at least some of the reinforcing weft threads (25) and the reinforcing warp threads (26) are configured as shortened reinforcing threads (25a, 26a) which have a thread length (L) which is smaller than the warp beam width (B) or smaller than the length of the produced fabric (20) in the warp thread direction (K), and wherein thread end positions (30, 31) of both ends of each shortened reinforcing thread (25a, 26a) and their respective thread length (L) are determined depending on the three-dimensional composite material part to be produced and predefined for the weaving loom,
- positioning heald frames of the weaving loom in an entry position for introducing at least one reinforcing weft thread (25) or at least one reinforcing warp thread (26),
- introducing a free end of a reinforcing weft thread (25) or reinforcing warp thread (26) from a thread store (39) up to a first thread end position (30) of the respective reinforcing thread (25, 26),
- cutting the introduced reinforcing thread (25, 26) at the second thread end position (31),
- fixing the introduced reinforcing thread (25, 26) by means of the binding system (21).

8. Method for producing a two-dimensional fabric (20) according to claim 7, **characterised in that** the at least one reinforcing weft thread (25) and/or the at least one reinforcing warp thread (26) is moved in sliding fashion until its free end has reached the first thread end position (30).

9. Method for producing a two-dimensional fabric (20) according to claim 8, **characterised in that** the reinforcing thread (25, 26) inserted up to the first thread end position is cut by means of a movable cutting device (45) at the second thread end position (31).

10. Method for producing a two-dimensional fabric (20) according to claim 9, **characterised in that** the reinforcing thread (25, 26) is moved by unwinding the reinforcing thread (25, 26) from a spool (63) which can be driven in rotation about a rotation axis (D).

11. Method for producing a two-dimensional fabric (20) according to any of claims 8 to 10, **characterised in that** a support surface (71) is present for supporting the at least one reinforcing thread (25, 26) during its sliding movement.

12. Method for producing a two-dimensional fabric (20) according to claim 7, using at least one gripper (35, 36):
- introducing the free end of the reinforcing weft thread (25) from the thread store (39) by means of a first gripper (35) up to the first thread end position (30) of the reinforcing weft thread (25), or up to a handover position (40), and handover of the free end of the reinforcing weft thread (25) to a second gripper (36),
- moving the first gripper (35) up to the second thread end position (31) of the reinforcing weft thread (25) and holding the reinforcing weft thread (25) adjacent to the second thread end position (31),
- cutting the reinforcing weft thread (25) at the second thread end position (31),
- moving the first gripper (35), with the free end of the reinforcing weft thread (25) connected to the thread store (39), away from the second thread end position (31),
- fixing the introduced reinforcing weft thread (25) by means of the binding system (21).

13. Method according to claim 12, **characterised in that** the second gripper (36) is moved from the handover position (40) to the first thread end position (30) of the reinforcing weft thread (25) if the handover position (40) does not correspond to the first thread end position (30) of the reinforcing weft thread (25).

14. Method according to claim 13, **characterised in that** on its movement from the handover position (40) to the first thread end position (30) of the reinforcing weft thread (25), the second gripper (36) moves away from the first gripper (35).

15. Method according to any of claims 12 to 14, **characterised in that** the first gripper (35) has a holding device (37) which can be switched between a clamping position (SK) applying a clamping load to the reinforcing weft thread (25), and a guide position (SF) loosely holding the reinforcing weft thread (25).

16. Method according to claim 15, **characterised in that** the holding device (37) is switched from the guide position (SF) to the clamping position (SK) when the first gripper (35) has reached the second thread end position (31) of the reinforcing weft thread (25).

17. Method according to any of claims 12 to 16, **characterised in that** the first gripper (35) comprises a cutting device (45).

18. Method according to claim 15, or 16 and according to claim 15, **characterised in that** the cutting device (45) is actuated after the first gripper (35) has reached the second thread end position (31) of the reinforcing weft thread (25) and the holding device (37) has been switched from the guide position (SF) to the clamping position (SK).

19. Method according to any of claims 12 to 18, **characterised in that** the fixing of the introduced reinforcing weft thread (25) takes place in several steps:
- securing the introduced reinforcing weft thread (25) by a shed change of one or more binding warp threads (23),
- looping the reinforcing weft thread (25),
- shed change of one or more further binding warp threads (23) in order to fix the reinforcing weft thread (25).

## Revendications

1. Tissu bidimensionnel (20) destiné à être utilisé lors de la fabrication d'un élément en matériau composite tridimensionnel,
comprenant des fils de trame de renfort (25) et des fils de chaîne de renfort (26) en fil de renfort, qui font partie d'un système de renfort (22),
comprenant des fils de chaîne de liage (23) qui sont constitués d'un fil de liage différent du fil de renfort et qui font partie d'un système de liage (21) et s'étendent dans une direction de fils de chaîne (K),
dans lequel le fil de renfort présente une résistance à la traction qui est supérieure à celle du fil de liage,
dans lequel la distance entre les deux fils de chaîne de liage (23) disposés le plus à l'extérieur, avec une distance maximale perpendiculairement à la direction de fils de chaîne (K), définit une largeur d'ensouple (B),
dans lequel au moins quelques-uns des fils de trame de renfort (25) et des fils de chaîne de renfort (26) sont réalisés sous forme de fils de renfort raccourcis (25a, 26a) présentant une longueur de fil (L) qui est soit inférieure à la largeur d'ensouple (B) soit inférieure à la longueur du tissu (20) fabriqué, dans la direction des fils de chaîne (K),
et dans lequel les positions d'extrémité de fil (30, 31) des extrémités des fils de renfort raccourcis (25a, 26a) et les longueurs de fil de ceux-ci sont définies en fonction de l'élément en matériau composite tridimensionnel à fabriquer.

2. Tissu bidimensionnel selon la revendication 1, **caractérisé en ce que** le fil de renfort est réalisé sous forme de ruban de renfort.

3. Tissu bidimensionnel selon la revendication 1 ou 2, **caractérisé en ce que** les fils de chaîne de renfort (26) et les fils de chaîne de liage (23) sont disposés sans se croiser et/ou **en ce que** le système de liage (21) présente des fils de trame de liage (24), sachant que les fils de trame de renfort (25) et les fils de trame de liage (24) sont disposés sans se croiser.

4. Tissu bidimensionnel selon la revendication 3, **caractérisé en ce que** les fils de trame de liage (24) sont fabriqués à partir de fil de liage.

5. Tissu bidimensionnel selon la revendication 3 ou 4, **caractérisé en ce que** les fils de trame de renfort (25) et/ou les fils de chaîne de renfort (26) sont disposés sans point de liage, sur le plan de la technique de tissage, avec les fils de chaîne de liage (23) et les fils de trame de liage (21) du système de liage (21) et sont maintenus par le système de liage (21).

6. Tissu bidimensionnel selon l'une des revendications 1 à 4, **caractérisé en ce que** les fils de trame de renfort (25) et/ou les fils de chaîne de renfort (26) présentent respectivement au moins un point de liage où ils sont liés directement avec l'un des fils de chaîne de liage (23) ou des fils de trame de liage (24) du système de liage (21).

7. Procédé de fabrication d'un tissu bidimensionnel (20), comprenant les étapes suivantes :
- équipement d'un métier à tisser avec des fils de trame de renfort (25) et des fils de chaîne de renfort (26) qui sont constitués d'un fil de renfort et font partie d'un système de renfort (22),
- équipement du métier à tisser avec des fils de chaîne de liage (23) qui sont constitués d'un fil de liage différent du fil de renfort et qui font partie d'un système de liage (21) et s'étendent dans une direction de fil de chaîne (K), la distance entre les deux fils de chaîne de liage (23) disposés le plus à l'extérieur, avec une distance maximale perpendiculairement à la direction de fils de chaîne (K), définissant une largeur d'ensouple (B),
- détermination du nombre et de la position des fils de trame de renfort (25) et des fils de chaîne de renfort (26) dans le tissu bidimensionnel (20), en fonction d'une forme d'un élément en matériau composite tridimensionnel devant être fabriqué, sachant qu'au moins quelques-uns des fils de trame de renfort (25) et des fils de chaîne de renfort (26) sont réalisés sous forme de fils de renfort raccourcis (25a, 26a) présentant une longueur de fil (L) qui est inférieure à la largeur d'ensouple (B) ou inférieure à la longueur du tissu (20) fabriqué, dans la direction des fils de chaîne (K), et sachant que les positions d'extrémité de fil (30, 31) des deux extrémités de chaque fil de renfort raccourci (25a, 26a) et la longueur de fil (L) respective de celui-ci sont déterminées en fonction de l'élément en matériau composite tridimensionnel à fabriquer et sont prédéfinies pour le métier à tisser,
- positionnement de lames du métier à tisser, dans une position d'insertion, en vue de l'insertion d'au moins un fil de trame de renfort (25) ou d'au moins un fil de chaîne de renfort (26),
- insertion d'une extrémité libre d'un fil de trame de renfort (25) ou d'un fil de chaîne de renfort (26), à partir d'une réserve de fil (39), jusqu'à une première position d'extrémité de fil (30) du fil de renfort (25, 26) respectif,
- coupe du fil de renfort (25, 26) inséré, à la deuxième position d'extrémité de fil (31),
- fixation du fil de renfort (25, 26) inséré, à l'aide du système de liage (21).

8. Procédé de fabrication d'un tissu bidimensionnel (20) selon la revendication 7, **caractérisé en ce que** le fil de trame de renfort (25), au nombre d'au moins un, et/ou le fil de chaîne de renfort (26), au nombre d'au moins un, sont déplacés par poussée, jusqu'à ce que son extrémité libre ait atteint la première position d'extrémité de fil (30).

9. Procédé de fabrication d'un tissu bidimensionnel (20) selon la revendication 8, **caractérisé en ce que** le fil de renfort (25, 26) qui est poussé jusqu'à la première position d'extrémité de fil est coupé à l'aide d'un dispositif de coupe (45) mobile, à l'emplacement de la deuxième position d'extrémité de fil (31).

10. Procédé de fabrication d'un tissu bidimensionnel (20) selon la revendication 9, **caractérisé en ce que** la poussée du fil de renfort (25, 26) est effectuée par dévidage du fil de renfort (25, 26) d'une bobine (63) pouvant être entraînée en rotation autour d'un axe de rotation (D).

11. Procédé de fabrication d'un tissu bidimensionnel (20) selon l'une des revendications 8 à 10, **caractérisé en ce qu'**il est prévu une surface d'appui (71) destinée à soutenir le fil de renfort (25, 26), au nombre d'au moins un, lors de la poussée.

12. Procédé de fabrication d'un tissu bidimensionnel (20) selon la revendication 7, en utilisant au moins un élément de préhension (35, 36) :
- insertion de l'extrémité libre du fil de trame de renfort (25) à partir de la réserve de fil (39), à l'aide d'un premier élément de préhension (35), jusqu'à la première position d'extrémité de fil (30) du fil de trame de renfort (25), ou jusqu'à une position de transfert (40) et au transfert de l'extrémité libre du fil de trame de renfort (25) à un deuxième élément de préhension (36) ;
- déplacement du premier élément de préhension (35) jusqu'à la deuxième position d'extrémité de fil (31) du fil de trame de renfort (25), et maintien du fil de trame de renfort (25) à proximité de la deuxième position d'extrémité de fil (31),
- coupe du fil de trame de renfort (25) à l'emplacement de la deuxième position d'extrémité de fil (31),
- déplacement du premier élément de préhension (35) avec l'extrémité libre du fil de trame de renfort (25) relié à la réserve de fil (39), en s'éloignant de la deuxième position d'extrémité de fil (31),
- fixation du fil de trame de renfort (25) inséré, à l'aide du système de liage (21).

13. Procédé selon la revendication 12, **caractérisé en ce que** le deuxième élément de préhension (36) est déplacé de la position de transfert (40) à la première position d'extrémité de fil (30) du fil de trame de renfort (25), lorsque la position de transfert (40) ne coïncide pas avec la première position d'extrémité de fil (30) du fil de trame de renfort (25).

14. Procédé selon la revendication 13, **caractérisé en ce que** lors de son mouvement de la position de transfert (40) à la première position d'extrémité de fil (30) du fil de trame de renfort (25), le deuxième élément de préhension (36) s'éloigne du premier élément de préhension (35).

15. Procédé selon l'une des revendications 12 à 14, **caractérisé en ce que** le premier élément de préhension (35) comprend un dispositif de maintien (37) qui peut être commuté entre une position de serrage (SK), agissant par serrage sur le fil de trame de renfort (25), et une position de guidage (SF) dans laquelle le fil de trame de renfort (25) est entouré de façon lâche.

16. Procédé selon la revendication 15, **caractérisé en ce que** le dispositif de maintien (37) est commuté de la position de guidage (SF) à la position de serrage (SK), lorsque le premier élément de préhension (35) a atteint la deuxième position d'extrémité de fil (31) du fil de trame de renfort (25).

17. Procédé selon l'une des revendications 12 à 16, **caractérisé en ce que** le premier élément de préhension (35) comprend un dispositif de coupe (45).

18. Procédé selon la revendication 15 ou 16 et selon la revendication 15, **caractérisé en ce que** le dispositif de coupe (45) est actionné après que le premier élément de préhension (35) a atteint la position d'extrémité de fil (31) du fil de trame de renfort (25), et que le dispositif de maintien (37) a été commuté de la position de guidage (SF) à la position de serrage (SK).

19. Procédé selon l'une des revendications 12 à 18, **caractérisé en ce que** la fixation du fil de trame de renfort (25) inséré s'effectue en plusieurs étapes :
- maintien du fil de trame de renfort (25) inséré, du fait d'un changement de foule d'un ou plusieurs fils de chaîne de liage (23),
- butée du fil de trame de renfort (25),
- changement de foule d'un ou plusieurs autres fils de chaîne de liage (23), en vue de la fixation du fil de trame de renfort (25).
